# EUROPEAN PATENT APPLICATION

(11) **EP 4 840 311 A1**
(43) Date of publication of application: **18.11.2026**
(21) Application number: 25175740.7
(22) Date of filing: 12.05.2025
(51) Int. Cl.: A01N 25/04

(54) **AQUEOUS SUSPENSION CONCENTRATE**

(71) Applicant: LANXESS Deutschland GmbH, 50569 Köln (DE); LANXESS Corporation, Pittsburgh, PA 15275-1112 (US)
(72) Inventor: GROTH, Torsten, 51519 Odenthal (DE); SCHOUTEN, Lennart, 2142 GJ Cruquius (NL); SCHOUTEN, Harry, 8411 KP Jubbega (NL); YARNELL, Amber, Vancouver (US); REMPALA, Pawel, Kalama (US); KEEHAN, Natalie, Itasca, 60143 (US)
(74) Representative: Bohrn, Ulrich Thomas

(57) **Abstract**

The present invention relates to an aqueous suspension concentrate comprising (a) 10 wt.% to 40 wt.% of one or more solid organic compounds with a melting point of 20°C or more and a solubility in water at 20°C and 1 bar of 20 g/l or less, (b) 1 wt.% to 15 wt.% of one or more surfactants, (c) 0.01 wt.% to 5 wt.% of one or more thickeners, (d) optionally less than 25 wt.% of one or more stabilizer salts and (e) an aqueous phase comprising water, wherein the percentages by weight refer to the total weight of the aqueous suspension concentrate. The present invention also relates to a process for preparation of such aqueous suspension concentrate and the use of the aqueous suspension concentrate to prepare a sprayable dilution comprising solid organic compound for various applications e.g., as plant protection product, fungicide, biostimulant, disinfectants or fertilizer.

## Description

The present invention relates to an aqueous suspension concentrate comprising (a) 10 wt.% to 40 wt.% of one or more solid organic compounds with a melting point of 20°C or more and a solubility in water at 20°C and 1 bar of 20 g/l or less, (b) 1 wt.% to 15 wt.% of one or more surfactants, (c) 0.01 wt.% to 5 wt.% of one or more thickeners, (d) optionally less than 25 wt.% of one or more stabilizer salts and (e) an aqueous phase comprising water, wherein the percentages by weight refer to the total weight of the aqueous suspension concentrate. The present invention also relates to a process for preparation of such aqueous suspension concentrate and the use of the aqueous suspension concentrate to prepare a sprayable dilution comprising solid organic compound for various applications e.g., as plant protection product, fungicide, biocide, biostimulant, disinfectant or fertilizer.

### Background

Concentrate formulations of solid organic compounds are widely used, e.g. in areas such as agriculture and plant protection, as concentrated formulations due to the advantage, that smaller amounts of volume and weight need to be stored before the final use. This saves packaging material and storage space. The concentrated solid organic compounds may be formulated in different ways depending on the physiochemical properties of the solid organic compounds contained therein. Solid organic compounds having a good solubility in water are frequently formulated as soluble liquids. Solid organic compounds having a limited solubility in water are often formulated as wettable powders (WP) or granules (WG), as emulsifiable concentrates (EC), as emulsions (EW), as suspoemulsions (SE), as microemulsions (ME), as aqueous suspension concentrates (SC), as soluble concentrate formulation (SC) or dispersion concentrate formulations (DC).

There are a lot of solid organic compounds which can be dissolved at suitable concentration range in a very polar or slightly water-soluble organic solvent, such as cyclohexanone, isophorone, N-methylpyrrolidone. The disadvantage of these solvents is that, when they are used as the sole dissolving agent, they can lead to crystallization of the solid organic compound upon dilution of the aqueous suspension concentrate with water. In the spray equipment used for the application of aqueous formulation, several filters and nozzles are present and the nozzles and filters can be blocked as a result of crystallization of solid organic compounds in highly diluted aqueous spray.

For solid organic compounds with low or no solubility in water, the formulation as an aqueous suspension concentrate (SC) formulation is highly desirable because aqueous suspension concentrates do not require organic solvents. Moreover, they can be easily prepared by milling the solid organic compound in an aqueous medium. On the other hand, aqueous suspension concentrates are thermodynamically instable and tend to agglomeration of the solid organic compound, sedimentation and caking, which is pronounced at high concentrations of the solid organic compound. Moreover aqueous suspension concentrates are typically stored for a long time before use and for this reason they must have a long term stability. Therefore, aqueous suspension concentrates are usually stabilized by surfactants (dispersants) and/or thickeners.

AU2020203751 describes for example a formulation of benzoic acid, a solid organic compound with a melting point of 122.3°C which is used as a fungistatic compound and as a food preservative. Benzoic acid is very soluble in alcohol, ether, and benzene, but poorly soluble in water (3.4 g/l of benzoic acid water at 20°C). The document discloses a soluble concentrate formulation comprising benzoic acid at a concentration of at least 10 g/l and ethanol as an organic solvent. The formulation disclosed in said document has disadvantages as the use of larger amounts of organic solvents might be harmful in crop and plant applications.

According to the "MENNO Florades" saftey data sheet (2024), the company Menno Chemie-Vertrieb GmbH produces a soluble concentrate formulation named MENNO Florades which comprises less than 10 wt.% benzoic acid in propan-1-ol, propan-2-ol, ethane-1,2-diol and formic acid. The product is intended to be used as disinfectant to control different pests or group of pests in ornamentals, vegetables and potato (as well as bactericide, fungicide, virucide and viroicide). The formulation disclosed in said document has disadvantages as the use of larger amounts of organic solvents might be harmful in crop and plant applications. Another disadvantage of organic solvents is the flammability which increases expense during transport and storage.

WO2010/064266 discloses a liquid composition for the preparation of pesticide concentrates comprising a water insoluble dialkylene glycol diester (such as dipropylene glycol dibenzoate), an organic carboxylic acid (such as benzoic acid) and at least one surfactant.

JP11346635 discloses a dispersion of fine particles for use in pest protection as a repellet composition for rice weevil, comprising 20 wt.% benzoic acid dispersed in water using a homogenizer from Hosokawa Micron Corp.

EP2950669B1 discloses stabilized benzoic acid micro-dispersions comprising 5 wt.% to 20 wt.% benzoic acid and 0.3 wt.% to 20 wt.% thickener, such as gum arabic, carboxymethyl cellulose (CMC) with a pH of 2.5 to 4. The benzoic acid dispersion is used to stabilize benzoic acid in syrup and finished baverages.

One object of the present invention is to provide an aqueous suspension concentrate of a solid organic compound which is as concentrated as possible and has a concentration of at least 10 wt.%, preferably at least 15 wt.% of solid organic compound based on the total weight of the aqueous suspension concentrate. The technical advantage of a high concentration are reduced transportation and packaging costs compared to diluted formulations. The aqueous suspension concentrate must be pourable in order to be used in further applications. Thus, the viscosity of the concentrate should be <4,5000 mPas, preferrably <3,000 mPas, more preferrably <2,000 mPas. Furthermore, the aqueous suspension concentrate must be stable over a longer period of time without sedimentation or forming of a block under storage and transport conditions or at least be redispersible after agitation (e.g., stirring or shaking). Ideally, the aqueous suspension concentrate should be stable between 5°C to 45°C during storage and transport over weeks and months. The aqueous suspension concentrate is typically used to be diluted with water to a form sprayable dilution. Depending on the mode of action of the solid organic compound, the sprayable dilution can be used in various applications, such as e.g., a fungicide, herbicide or insecticide for plant protection or as disinfectant for greenhouses or agricultural equipment. In order to provide a sprayable dilution, the aqueous suspension concentrate is typically diluted with water by 1:15 to 1:200, preferably 1:25 to 1:150. During the spraying process, the nozzles of the spraying device may not be blocked by particles of the solid organic compound. The particle size of the solid organic compound needs to be small enough to ensure, that the particles in the aqueous suspension concentrate are well distributed. It is thus preferred to provide aqueous suspension concentrate with a medium particle size of <150 µm, preferrably <100 µm and more preferrably <50 µm.

One of the main issues with generating a stable aqueous suspension concentrates is the water solubility and recrystallization potential of the solid organic compound. The growth of larger crystals is problematic since there is the possibility that a solid block could form on the bottom of the container and prevent the accurate dosing of e.g. benzoic acid. The larger crystals may not fully dissolve by the time the diluted aqueous suspension concentrate is sprayed and may clog the spraying nozzles. Although there are in principle technical possibilities for producing concentrated dispersions with small particle sizes, for example by applying high shear forces during dilution, it would be desirable to avoid them.

There is therefore a need for an improved aqueous suspension concentrate for solid organic compounds. It would be very advantageous if the aqueous suspension concentrate could overcome one or more of the aforementioned technical issues.

An objective of the present invention is to provide a suspension concentrate with high amounts of solid organic compound of at least 10 wt.% which is based on aqueous phase.

Another objective of the present invention is to reduce or avoid organic solvents (such as ethanol, propanol, NMP (N-methyl pyrrolidin), etc.) in said aqueous suspension concentrate.

Another objective of the present invention is to provide an aqueous suspension concentrate, which is pourable (i.e., has a viscosity at 20°C of less than 4,500 mPas).

Another objective of the present invention is to provide an aqueous suspension concentrate, which is stable for at least 24 hours at 20°C or redispersible after shaking once it formed a sedimented phase.

Another objective of the present invention is to provide an aqueous suspension concentrate, which is dilutable in water to form a sprayable dilution, with an mean particle size distribution of the non-dissolved solid organic compound particles of less than 150 µm as measured according to measurement method laser diffraction according to ISO 13320-1:2020 to avoid clogging of nozzles in spraying devices.

Another objective of the present invention is to provide an aqueous suspension concentrate, wherein the components of the aqueous suspension concentrate are biodegradable and bio-sourced and sustainably produced.

It was now surprisingly found that an aqueous suspension concentrate comprising
a) 10 wt.% to 40 wt.% of one or more solid organic compounds,
b) 1 wt.% to 15 wt.% of one or more surfactants,
c) 0.01 wt.% to 5 wt.% of one or more thickeners,
d) optionally less than 25 wt.% of one or more stabilizer salts and
e) an aqueous phase comprising water,
wherein the percentages by weight refer to the total weight of the aqueous suspension concentrate, forms a stable aqueous suspension concentrate which overcomes the drawbacks of the prior art.

In, a first aspect of the present invention relates to an aqueous suspension concentrate comprising a) 10 wt.% to 40 wt.%, preferably 15 wt.% to 40 wt.%, more preferably 15 wt.% to 38 wt.% and most preferably 20 wt.% to 35 wt.% of one or more solid organic compounds with a melting point of 20°C or more and a solubility in water at 20°C and 1 bar of 20 g/l or less, b) 1 wt.% to 15 wt.%, preferably 2 wt.% to 12 wt.%, more preferably 3 wt.% to 10 wt.% and most preferably 4 wt.% to 8 wt.% of one or more surfactants, c) 0.01 wt.% to 5 wt.%, preferably 0.05 wt.% to 2 wt.%, more preferably 0.075 wt.% to 1 wt.% and most preferably 0.1 wt.% to 0.5 wt.% of one or more thickeners, d) optionally less than 25 wt.%, preferably 1 wt.% to 20 wt.%, more preferably 4 wt.% to 18 wt.% and most preferably 6 wt.% to 20 wt.% of one or more stabilizer salts, and e) an aqueous phase comprising water, wherein the percentages by weight refer to the total weight of the aqueous suspension concentrate.

A second aspect of the present invention relates to an aqueous suspension concentrate according to the first aspect, characterized in that the solid organic compound is an agrochemical, preferably selected from the group consisting of: 1-dodecanol, 1-hexadecanol, 1-naphthylacetic acid, 2,4-dichlorophenoxyacetic acid, 4-(2,4-dichlorophenoxy)butyric acid, 2-hydroxybenzoic acid, 2-phenylphenol, 4-chloro-3-methylphenol, azoxystrobin, benzoic acid, capric acid, cinnamic acid, dichlorprop-P, diclofop, fludioxonil, gibberellic acid, phenylacetic acid, phenylpropanoic acid, S-abscisic acid, sorbic acid, thiabendazole, thymol and p-thymol, more preferably benzoic acid, salicylic acid, cinnamic acid or p-thymol and most preferably benzoic acid.

A third aspect of the present invention relates to the aqueous suspension concentrate according to the first or second aspect, characterized in that the surfactant is selected from the group consisting of anionic surfactants, cationic surfactants, non-ionic surfactants, amphoteric surfactants biosurfactants and mixtures thereof, preferably selected from a group consisting of rhamnolipid, sophorolipid, sodium xylenesulfonate (SXS), sodium dodecylbenzene sulfonate (SDS), linear alcohol ethoxylate, lauramine oxide, cocamidopropyl betaine, sodium caproyl/lauroyl lactylate, glyceryl caprylate/caprate, glyceryl monostearate, ethylene glycol distearate, methyl glucose dioleate, polyethylene glycol dilaurate, glycosides and mixtures thereof, more preferably selected from a group consisting of rhamnolipid and sphorolipid and mixtures thereof, even more preferably rhamnolipid with the EC# 943-175-7 or with the CAS# 2892303-59-0 and most preferably rhamnolipid with the CAS# 2892303-59-0.

A fourth aspect of the present invention relates to the aqueous suspension concentrate according to any of the first to third aspect, characterized in that the thickener is selcted from a group consisting of polysaccharides, clays, celluloses, polyacrylates, and silicas, in particular starch, xanthan gum, guar gum, locust bean gum, gum karaya, gum tragacanth, gum arabic, methyl cellulose, ethyl cellulose, methylhydroxyethyl cellulose, methylhydroxyethylhydroxypropyl cellulose, hydroxypropyl methyl cellulose, pectin, agar, alginin, carrageenan, pullulan, and alginic acid salts, preferably selected from the group consisting of xanthan gum, gum arabic, gaur gum, carboxymethyl cellulose, chitosan, bentonite, precipitated silica and mixtures thereof, more preferabyl selected from the group consisting of xanthan gum, guar gum, and a cellulose-based thickener and most preferably xanthan gum.

A fifth aspect of the present invention relates to the aqueous suspension concentrate according to any of the first to fourth aspect, characterized in that the stabilizer salt is an inorganic salt with a solubility in water at 20°C of 20 g/100 ml or higher, preferably selected from the group consisting of inorganic sodium salt, potassium salt, magnesium salt, calcium salt, iron salt, zinc salt and mixtures thereof, more preferably magnesium sulfate, calcium chloride, sodium sulfate, monosodium phosphate, potassium sulfate, potassium nitrate, iron sulfate and zinc sulfate, even more preferably magnesium sulfate or iron sulfate and most preferably magnesium sulfate.

A sixth aspects of the present invention relates to The aqueous suspension concentrate according to any of the first to fifth aspect, further comprising one or more additives, selected from the group consisting of: buffers, anti-freeze agents, antifoam agents, dyes, pigments, agrochemical active compounds, biocides such as insectizides, fugizides, herbizides, rodenticides or molluscicides, soil conditioners, liming and acidifying agents, biostimulants such as plant growth regulators, nitrification inhibitors or urease inhibitors, fertilizer, and preservatives, wherein the additive in present in an amount of 0.1 wt.% to 10 wt.%, preferably 0.2 wt.% to 5 wt.%, based on the total weight of the aqueous suspension concentrate.

A seventh aspect of the present invention relates to the aqueous suspension concentrate according to any of the first to sixth aspect, comprising a) 10 wt.% to 40 wt.% benzoic acid, b) 1 wt.% to 15 wt.% surfactant, c) 0.01 wt.% to 2.0 wt.% thickener and d) water, wherein the percentages by weight refer to the total weight of the aqueous suspension concentrate.

An eighth aspect of the present invention relates to the aqueous suspension concentrate according to any of the first to seventh aspect, comprising a) 30 wt.% to 40 wt.% benzoic acid, b) 4 wt.% to 8 wt.% rhamnolipid with the EC# 943-175-7 or CAS# 2892303-59-0, c) 0.05 wt.% to 2 wt.% xanthan gum and d) water, wherein the percentages by weight refer to the total weight of the aqueous suspension concentrate.

A ninth aspect of the present invention relates to the aqueous suspension concentrate according to any of the first to seventh aspect, comprising a) 30 wt.% to 40 wt.% benzoic acid, b) 4 wt.% to 8 wt.% rhamnolipid with the EC# 943-175-7 or CAS# 2892303-59-0, c) 6 wt.% to 15 wt.% MgSO₄, d) 0.05 wt.% to 2 wt.% xanthan gum and e) water, wherein the percentages by weight refer to the total weight of the aqueous suspension concentrate.

A tenth aspects of the present invention relates to the aqueous suspension concentrate according to any of the first to seventh aspect, comprising a) 10 wt.% to 25 wt.% benzoic acid, b) 4 wt.% to 8 wt.% rhamnolipid with the EC# 943-175-7 or CAS# 2892303-59-0, c) 10 wt.% to 20 wt.% MgSO₄, d) 0.05 wt.% to 2 wt.% xanthan gum and e) water, wherein the percentages by weight refer to the total weight of the aqueous suspension concentrate.

An eleventh aspect of the present invention relates to a method of preparing an aqueous suspension concentrate according to any of the first to tenth aspect, characterized in that the process comprises the steps of: 1) mixing the one or more solid organic compounds, surfactants, thickeners, optionally stabilizer salts, and water to provide a mixture, 2) optionally grinding said mixture and 3) optionally filtering said mixture.

A twelfth aspect of the present invention relates to a method of preparing a sprayable dilution, characterized in that it comprises the steps of: 1) providing an aqueous suspension concentrate according to any of the first to tenth aspect, 2) diluting said aqueous suspension concentrate with water in a ratio of 1:1 to 1:1,000, preferably 1:5 to 1:500, more preferably 1:15 to 1:200 and most preferably 1:25 to 1:150, to provide a sprayable dilution.

A thirteenth aspect of the present invention relates to a sprayable dilution prepared according to the method of twelfth aspect.

A fourteenth aspect of the present invention relates to the use of an aqueous suspension concentrate according to any of to the first to tenth aspect, comprising benzoic acid, as a disinfectant, fertilizer, biostimulant or plant protection product, preferably as a fungicide.

A fifteenth aspect of the present invention relates to the use of the sprayable dilution according to the thirteenth aspect, comprising benzoic acid, as a disinfectant, fertilizer, biostimulant or plant protection product, preferably as a fungicide.

The present invention is associated with several benefits. The aqueous suspension concentrates of the present invention have high physical stability even at high amounts of the solid organic compound and stabilizer salt. In particular, they have a very good storage stability even at elevated (e.g. up to 45°C) temperature, and do not show significant particle size growth or agglomeration of the suspended solid organic compound. Apart from that, the viscosities of the aqueous suspension concentrates of the present invention do not significantly alter upon storage. Moreover, the aqueous suspension concentrate can be easily diluted with water. Furthermore, the aqueous suspension concentrate of the present invention are compatible with other agrochemicals, in tank mix applications. Furthermore, the cleanout of the aqueous suspension concentrate from agricultural machinery is very user-friendly, that primary and secondary losses of solid organic compound are reduced.

### DETAILED DESCRIPTION OF THE INVENTION

### Definitions

Prior to setting forth the present subject matter in detail, it may be helpful to provide definitions of certain terms to be used herein. Unless defined otherwise, all technical and scientific terms used herein have the same meaning as is commonly understood by one of skill in the art to which this subject matter pertains. The following definitions are provided for clarity.

The scope of the present invention encompasses all combinations of substituent defnitions, areas of preference or preferred embodiments, with one another, i.e., also any combinations between the particular areas and areas of preference.

The term "a" or "an" as used herein includes the singular and the plural, unless specifically stated otherwise. Therefore, the terms "a," "an," or "at least one" can be used interchangeably in this application.

As used herein, the verb "comprise" as is used in this description and the claims and its conjugations are used in its non-limiting sense to mean that items following the word are included, but items not specifically mentioned are not excluded.

As used herein, the term "mixture" or "combination" refers, but is not limited to, a combination in any physical form, e.g., blend, solution, alloy, or the like

As used herein, the term "aqueous suspension concentrate" is used for suspensions of solid organic compound in an aqueous phase. In the context of the present invention the terms "suspension concentrates", "aqueous suspension concentrate formulations", "suspension concentrate formulations", "SC concentrates" and "SC formulations" are used synonymously and refer to the aqueous suspension concentrate of the present invention.

As used herein, the term "plant protection product" (PPP) is used for products, in the form in which they are supplied to the user, consisting of or containing active substances, safeners or synergists, and intended for one of the following uses: (a) protecting plants or plant products against all harmful organisms or preventing the action of such organisms, unless the main purpose of these products is considered to be for reasons of hygiene rather than for the protection of plants or plant products; (b) influencing the life processes of plants, such as substances influencing their growth, other than as a nutrient; (c) preserving plant products, in so far as such substances or products are not subject to special Community provisions on preservatives; (d) destroying undesired plants or parts of plants, except algae unless the products are applied on soil or water to protect plants; (e) checking or preventing undesired growth of plants, except algae unless the products are applied on soil or water to protect plants, according to the meaning of Article 2(1) of the Regulation (EC) No 1107/2009 of the European Parliament and the council of 21 October 2009 concerning the placing of plant protection products on the market and repealing Council Directives 79/117/EEC and 91/414/EEC.

Here and in the following, the terms "wt.%" and "% by weight" are used synonymously and refer to the concentration of a specific compound in the aqueous suspension concentrate on a weight basis.

As used herein the term "pesticide" refers to any compound or mixture of compounds intended for preventing, destroying, repelling, or mitigating pests, such as insecticide, herbicide, fungicide and disinfectant.

As used herein, the term "insecticide" broadly refers to compounds that kill, control, repel, or mitigate one or more species of insects.

As used herein, the term "fungicide" broadly refers to compounds, of natural or synthetic origin, which act to protect plants against damage caused by fungi.

As used herein the term "plant" or "crop" refers, but is not limited, to whole plants, plant organs (pre- and post-harvest, e.g., leaves, stems, twigs, roots, trunks, limbs, shoots, fruits), plant cells, or plant seeds. This term also encompasses plant crops such as oilseed rape (e.g. canola), cotton, rice, banana, potato (including sweet potato), coffee, sugar cane, citrus, beans, sunflower, corn, soybean, wheat, barley, oats, chickpeas, fruit trees, nut trees (e.g. almonds), lentils, grain sorghum, alfalfa, brassicas, fruiting vegetables (e.g. tomatoes, pepper, chili, eggplant, cucumber, squash), tea, bulb vegetables (e.g. onion, leek), grapes, pome fruit (e.g. apples, pears), and stone fruit (e.g. pears, plums). In some embodiments, the term "plant" may include the propagation material thereof.

CAS numbers, also known as CAS# or CAS Registry Numbers, CAS being an abbreviation for "Chemical Abstracts Service", is an international designation standard for chemical substances. CAS numbers have been assigned since 1965 by the Chemical Abstracts Service, an institution administered by the American Chemical Society and based in Columbus, Ohio, USA.

EC numbers, also known as EC#, EC being an abbreviation for "European Community", are unique seven-digit identifiers assigned to substances for regulatory purposes within the European Union by the European Commission.

### Solid organic compound

The aqueous suspension concentrate of the present invention comprises one or more solid organic compounds.

The term "solid organic compounds" according to the present invention means a compound with a melting point (mp) above 20°C, which is typically also referred to as room temperature (RT) and a solubility in water at RT (20°C) of 20 g/L or lower. Here, the solid state or liquid state refers to the stage of the compound at 20°C and 1 bar.

In a preferred embodiment of the present invention, the solid organic compound is an agrochemical. The term "agrochemical" refers to a chemical compound used in agricultural formulations. Non-limiting examples of agrochemicals include fertilizers, micronutrients, activator adjuvants or potentiators, drift control agents, emulsifier, deposition aids, water conditioners, wetting agents, compatibility agents, pesticides such as herbiciede, fungicides, nematocides and insecticides, soil-conditioners and growth regulators such as growth inhibitors.

In a more preferred embodiment of the present invention, the solid organic compound is an plant protection product.

In an even more preferred embodiment of the present invention, the solid organic compound is selected from a group consisting of: 1-dodecanol (mp: 24°C; CAS# 112-53-8), 1-hexadecanol (mp: 49°C; CAS# 36653-82-4), 1-naphthylacetic acid (1-NAA) (mp: 135°C; CAS# 86-87-3), 2,4-dichlorophenoxyacetic Acid (mp: 140,5°C; CAS# 94-75-7), 4-(2,4-dichlorophenoxy)butyric acid (mp: 117°C; CAS# 94-82-6), 2-hydroxybenzoic acid (=salicylic acid) (mp: 158,6°C; CAS# 69-72-7), 2-phenylphenol (=o-phenylphenol, OPP) (mp: 55 - 57°C; CAS# 90-43-7), 4-chloro-3-methylphenol (mp: 63 - 65°C; CAS# 59-50-7), azoxystrobin (mp: 114°C; CAS# 131860-33-8), benzoic acid (mp: 122°C; CAS# 65-85-0), capric acid (=decanoic acid) (mp: 31,6°C; CAS# 334-48-5), cinnamic acid (=benzenepropenoic acid) (mp: 133°C; CAS# 621-82-9), dichlorprop-P (mp: 116°C; CAS# 15165-67-0), diclofop (mp: 39°C; CAS# 40843-25-2), fludioxonil (mp: 199,8°C; CAS# 131341-86-1), gibberellic acid (mp: 223°C; CAS# 77-06-5), phenylacetic acid (mp: 76°C; CAS# 103-82-2), phenylpropanoic acid (mp: 47°C; CAS# 501-52-0), S-abscisic acid (mp: 186°C; CAS# 21293-29-8), sorbic acid (=hexa-2,4-dienoic acid) (mp: 135°C; CAS# 110-44-1), thiabendazole (mp: 297°C; CAS# 148-79-8), thymol (=2-(1-methylethyl)-5-methylphenol) (mp: 49°C; CAS# 89-83-8) and p-thymol (4-isopropyl-m-cresol) (mp: 111° CAS 3228-02-2).

In a particularly preferred embodiment of the present invention, the solid organic compound is selected from a group consisting of benzoic acid, salicylic acid, cinnamic acid or p-thymol.

In the most preferred embodiment of the present invention, the solid organic compound is benzoic acid.

Benzoic acid (C₇H₆O₂) is typically availably in the form of solid flakes or fine powder at room temperature. The solubility of benzoic acid in water is low (3.4 g/L at 20°C). Benzoic acid is known for many years as a preservative in various applications. In addition, benzoic acid has a known fungicidal effect and is therefore used in crop and plant protection, e.g. as fungicide to control different pests or group of pests in ornamentals, vegetables and potato, as post-harvest fungicide e.g. on fruits, etc, or as disinfectant.

In the aqueous suspension concentrate of the present invention, the solid organic compound is present in the form of undissolved suspended particles in the aqueous phase of the aqueous suspension concentrate. Typically, at least 90 wt.%, preferably at least 95 wt.%, more preferably at least 96 wt.% of the solid organic compound are present as solid particles based on the total weight of the solid organic compound in the aqueous suspension concentrate.The remaining amount of the solid organic compound is solved in the aqueous phase of the aqueous suspension concentrate.

The particles of the solid organic compound may be characterized by their size distribution, which can be determined by laser diffraction according to ISO 13320-1:2020. Laser diffraction is the most widely used method for measuring particle size distribution, yielding a distribution based on the volume percentage of particles, i.e., volume distribution. Suitable laser light scattering measurement units are inter alia produced under the trade name SYNC from Microtrac.

Generally, the particles of the solid organic compound in the aqueous suspension concentrate of the present invention have a mean particle size of <150 µm, preferably <100 µm, more preferably <70 µm and most preferably <50 µm as measrued according to ISO 13320-1:2020.

The aqueous suspension concentrate of the present invention comprises, the solid organic compound in an amount of 10 wt.% to 40 wt.%, preferably 15 wt.% to 40 wt.%, more preferably 15 wt.% to 38 wt.%, most preferably 20 wt.% to 35 wt.%, based on the total weight of the aqueous suspension concentrate of the present invention.

### Surfactant

The aqueous suspension concentrate according to the present invention comprises one or more surfactants. The term "surfactant" (often referred to also as dispersant) as used herein refers to a chemical compound that reduces surface tension between two liquids, a liquid and a gas, or a liquid and a solid.

Surfactants, which are suitable for the present invention, include anionic surfactants, cationic surfactants, non-ionic surfactants, amphoteric surfactants, zwitterionic surfactants biosurfactants and mixtures thereof.

In one embodiment of the present invention, the aqueous suspension concentrate comprises as surfactant at least one anionic surfactant which bears at least one anionic group selected from sulfonate, sulfate, phosphonate and phosphate groups.

Anionic surfactants, which are suitable for the present invention, include:
- aryl- and C₁-C₁₆-alkylarylsulfonates such as naphthylsulfonate, mono-, di- and tri-C₁-C₁₆-alkylnaphthylsulfonates such as dibutylnaphtylsulfonate, dodecyldiphenylether sulfonate, mono-, di- and tri-C₁-C₁₆-alkylphenylsulfonates such as cumylsulfonate, octylbenzene sulfoanate, nonylbenzenesulfonate, dodecylbenzene sulfonate and tridecylbenzene sulfonate;
- aryl ether sulfates, in particular aryl poly(C₂-C₃-alkylene oxide) ether sulfates, e.g. the sulfates of (poly)ethoxylated di- or tristyrylphenols and the sulfates of (poly)ethoxylated-co-propoxylated di- or tristyrylphenols;
- aryl ether phosphates, in particular aryl poly(C₂-C₃-alkylene oxide) ether phosphates, e.g. the phosphate esters of (poly)ethoxylated di- or tristyrylphenols and the phosphate esters of (poly)ethoxylated-co-propoxylated di- or tristyrylphenols;
- condensates of arylsulfonic acid, such as naphthalenesulfonic acid or phenolsulfonic acid, with formaldehyde and condensates of arylsulfonic acid, such as naphthalenesulfonic acid or phenolsulfonic acid, with formaldehyde and urea.

The anionic surfactants are typically present in the aqueous suspension concentrate of the present invention as their salts, in particular the ammonium salts, the alkaline metal salts, such as the sodium or potassium salt, and the earth alkaline metal salts, in particular the calcium salts.

In a preferred embodiment of the present invention, the surfactant of the aqueous suspension concentrate in an anionic surfactant selected from the group consisting of: sodium lauryl sulfate (SLS), sodium dodecylbenzene sulfonate (SDS; CAS# 25155-30-0), sodium xylene sulfonate (SXS; CAS# 1300-72-7), C13 Alcohol ethoxylat + 5EO phosphate ester (Lanphos PE35) and mixtures thereof.

In a more preferred embodiment of the present invention, the surfactant of the aqueous suspension concentrate is sodium dodecylbenzene sulfonate.

In one embodiment of the present invention, the aqueous suspension concentrate comprises as surfactant at least one "cationic surfactant".

The term "cationic surfactant" as used herein refers to a surface-active compound that contains a hydrophobic tail (typically a long-chain hydrocarbon) and a hydrophilic head group that carries a positive charge in aqueous solution.

Cationic surfactants, which are suitable for the present invention, include Cetyltrimethylammonium bromide (CTAB), Stearyldimethylbenzylammonium chloride, Dodecyltrimethylammonium chloride (DTAC), Tetradecyltrimethylammonium chloride (TTAC), Hexadecylpyridinium chloride, Dodecylpyridinium bromide, Bis(2-hydroxyethyl)oleylmethylammonium chloride, Tallowtrimethylammonium chloride and mixtures thereof.

In one embodiment of the present invention, the aqueous suspension concentrate comprises as surfactant at least one "non-ionic surfactant".

The term "non-ionic surfactant" as used herein refers to a surface-active compound that contains a hydrophobic tail (typically a long-chain hydrocarbon) and a hydrophilic head group that lacks any formal charge. Instead of ionic groups, the hydrophilic portion consists of polar functional groups such as hydroxyl (-OH), ether (-O-), ester (-COO-), or amide (-CONH-) groups, which enable solubility in water through hydrogen bonding.

Non-ionic surfactants, which are suitable for the present invention, include alkyl ethoxylates, alkyl ethoxylates-co-propoxylates, alkylphenol ethoxylates, alkylphenol ethoxylates-co-propoxylates, tributylphenol ethoxylates, tributylphenol ethoxylates-copropoxylates, tristyrylphenol ethoxylates, tristyrylphenol ethoxylates-co-propoxylates, ethylene oxide-co-propylene, oxide block-co-polymers, fatty acid polyethyleneglycol esters, fatty acid polyglycerol esters, fatty acid polyglycerol ester ethoxylates, fatty acid polyglycerol ester ethoxylates-co-propoxylates, sorbitan ester ethoxylates, sorbitan ester ethoxylates-copropoxylates, castor oil ethoxylates, castor oil ethoxylates-copropoxylates, glycerides, C8-10 mono-, di- and tri- (CAS# 91744-32-0, e.g., Stepan-MILD GCC) and mixtures thereof.

Non-ionic linear ethoxylate surfactants, which are suitable for the present invention, include PEG -8 dilaurate (e.g., Hallstar PEG 400DL), C13 PEG (e.g., Tergitol 15-S-3), glycol distearate (e.g., Lipo Veg pastilles), glycerol mono and distearate and polyoxyethylene-stearate (e.g., Arlacel 165-PW-(AP)), laureth 7 (e.g., Procol LA7), steareth 21 (e.g., lipocol S21), PEG 150 distearate (e.g., PEG 150 distearate), C11 alcohol ethoxylate (e.g., Biosoft N1-7), C12-15 alcohol ethoxylate (e.g., Biosoft N25-7) and mixtures thereof.

Non-ionic sugars, which are suitable for the present invention, include Polysorbate 20, alkyl polyglucoside (e.g., Glucopon 600), methyl glucose dioleate (e.g., Glucate DO) and mixtures thereof.

In one embodiment of the present invention, the aqueous suspension concentrate comprises as surfactant at least one "amphoteric surfactant".

Amphoteric surfactants, which are suitable for the present invention, include: lauramine oxide (CAS# 1643-20-5; e.g., Ammonyx LO), cocamidopropyl betaine (CAS# 61789-40-0; e.g., Amphosol CG) lecithin (e.g., Alcolex F100) and mixtures thereof.

In a preferred embodiment of the present invention, the aqueous suspension concentrate comprises as surfactant at least one "biosurfactant". The term "biosurfactant" as used herein refers to surfactants of microbial origin such as bacteria or fungus, microalgae or plants. Biosurfactants according to the present invention are commercially available from suppliers such as Jeneil, Evonik Industries, AGAE Technologies, Glycosurf, Tensiogreen, Stepan, Holiferm, BASF, Solvay and Daqing VICTEX Industries.

In a preferred embodiment of the present invention, the aqueous suspension concentrate comprises as surfactant at least one biosurfactant which is a glycolipid, preferably selected from the group consisting of rhamnolipids and sphorolipids.

The term "rhamnolipid" as used herein refers to "mono-rhamnolipid" and "di-rhamnolipid".

The term "mono-rhamnolipid" as used herein refers to glycolipid surfactants composed by a hydrophilic head of one rhamnose moieties coupled to hydroxyaliphatic chains that can be of different lengths. Mono-rhamnolipid surfactants, which are suitable for the present invention, include REWOFERM^{®} RL 300.

The term "di-rhamnolipid" as used herein refers to glycolipid surfactants composed by a hydrophilic head of two rhamnose moieties coupled to hydroxyaliphatic chains that can be of different lengths. Di-rhamnolipid surfactants, which are suitable for the present invention, include Rheance^{®} ONE (Evonik), REWOFERM^{®} RL 100 (EC# 943-175-7, Evonik) and REWOFERM^{®} RL 210 (CAS# 2892303-59-0, EC# 896-041-4, Evonik).

The term "sophorolipid" as used herein refers to glycolipid surfactants composed by a mixture of the sophorolipid (acid type) and the sophorolipid (lactone type). Sophorolipids, which are suitable for the present invention, include Amphi^{®} CH (Locus Ingredients), Amphi^{®} CL(Locus Ingredients), Amphi^{®} M (Locus Ingredients) and Sophance^{®} LA-A (Evonik).

In a more preferred embodiment of the present invention, the surfactant is selected from a group consisting of rhamnolipid, sophorolipid, sodium xylenesulfonate (SXS), sodium dodecylbenzene sulfonate (SDS), linear alcohol ethoxylate, lauramine oxide, cocamidopropyl betaine, sodium caproyl/lauroyl lactylate, glyceryl caprylate/caprate, glyceryl monostearate, ethylene glycol distearate, methyl glucose dioleate, polyethylene glycol dilaurate and glycosides.

In an even more preferred embodiment of the present invention, the surfactant is selected from a group consisting of rhamnolipid and sphorolipid and mixtures thereof,

In a particularly preferred embodiment of the present invention, the surfactant is a rhamnolipid with the EC#943-175-7 or a rhamnolipid with the CAS# 2892303-59-0.

In a most preferred embodiment of the present invention, the surfactent is a rhamnolipid with the CAS# 2892303-59-0.

The aqueous suspension concentrate of the present invention comprises, the surfactant in an amount of 1 wt.% to 15 wt.%, preferably 2 wt.% to 12 wt.%, more preferably 3 wt.% to 10 wt.% and most preferably 4 wt.% to 8 wt.%, based on the total weight of the aqueous suspension concentrate of the present invention.

### Thickener

The aqueous suspension concentrate according to the present invention comprises a thickener. The term "thickener" as used herein refers to any compound that can prevent or reduce the separation of the solid particles of the solid organic compound from the aqueous suspension concentrate over an extended period of time under typical storage conditions and/or a compound that can prevent or reduce the formation of a hard packed sediment of the solid particles of the solid organic compound upon storage of the formulations of the disclosure over an extended period of time under typical storage conditions. A thickener is necessary to adjust the viscosity and to lower the sedimentation.

Thickeners, which are suitable for the present invention, include polysaccharides, clays, celluloses, polyacrylates, and silicas, in particular starch, xanthan gum, guar gum, locust bean gum, gum karaya, gum tragacanth, gum arabic, methyl cellulose, ethyl cellulose, methylhydroxyethyl cellulose, methylhydroxyethylhydroxypropyl cellulose, hydroxypropyl methyl cellulose, pectin, agar, alginin, carrageenan, pullulan, and alginic acid salts.

Xanthan gum (CAS# 11138-66-2) is a polysaccharide known to the skilled person. It is composed of pentasaccharide repeat units comprising glucose, mannose, and glucuronic acid.

Guar gum (CAS# 9000-30-0), also called guaran, is a galactomannan polysaccharide that may be obtained from guar beans. It is composed of the sugars galactose and mannose.

Cellulose-based thickeners are cellulose ethers known to the skilled. Suitable examples of cellulose-based thickeners are methylcellulose, hydroxypropyl methylcellulose, hydroxyethyl cellulose, hydroxyethyl methylcellulose, hydroxypropyl cellulose, carboxymethyl cellulose, and mixtures thereof. Preferably, the cellulose based thickener is non-ionic and does not bear carboxyl groups. In a preferred embodiment of the present invention, the cellulose-based thickener is selected from hydroxypropyl methylcellulose and methylcellulose. More preferably, the cellulose-based thickener is hydroxypropyl methyl cellulose. In another embodiment of the present invention, the cellulose-based thickener is methylcellulose.

In one embodiment of the present invention, the thickener is selcted from a group consisting of polysaccharides, clays, celluloses, polyacrylates, and silicas, in particular starch, xanthan gum, guar gum, locust bean gum, gum karaya, gum tragacanth, gum arabic, methyl cellulose, ethyl cellulose, methylhydroxyethyl cellulose, methylhydroxyethylhydroxypropyl cellulose, hydroxypropyl methyl cellulose, pectin, agar, alginin, carrageenan, pullulan, and alginic acid salts.

In a preferred embodiment of the present invention, the thickener is selected from the group consisting of xanthan gum, gum arabic, gaur gum, carboxymethyl cellulose, chitosan, bentonite, precipitated silica and mixtures thereof.

In a more preferred embodiment of the present invention, the thickener is selected from a group consisting of xanthan gum, guar gum, and a cellulose-based thickener.

In the most preferred embodiment of the present invention, the thickener is xanthan gum.

The aqueous suspension concentrate of the present invention comprises the thickener in an amount of 0.01 wt.% to 5 wt.%, preferably 0.05 wt.% to 2 wt.%, more preferably 0.075 wt.% to 1 wt.% and most preferably 0.1 wt.% to 0.5 wt.% based on the toal weight of the aqueous suspension concentrate of the present invention.

In a preferred embodiment of the present invention, the aqueous suspension concentrate comprises xanthan gum as the thickener in an amount from 0.01 wt.% to 5 wt.%, preferably from 0.05 wt.% to 2 wt.%, more preferably from 0.075 wt.% to 1 wt.% and most preferably 0.1 wt.% to 0.5 wt.% based on the toal weight of the aqueous suspension concentrate of the present invention.

### Stabilizer salts

Optionally, the aqueous suspension concentrate according to the present invention may comprise one or more stabilizer salt. The term "stabilizer salt" as used herein refers to organic and inorganic salts with a solubility in water at 20°C of 10 g/100 ml or higher.

In an alternative embodiment of the present invention, the stabilizer salt is an inorganic carboxylat.

In a preferred embodiment of the present invention, the inorganic carboxylate is selected from a group consisting of: benzoic acid salts, acetic acid salts, citric acid salts, formic acid salt, glycolic acid salts, lactic acid salts, malic acid salts, oxalic acid salts, propionic acid salts and trataric acid salts.

In a more preferred embodiment of the present invention, the inorganic carboxylate is sodium benzoate.

The acetic acid salt, suitable with any aspect of the present invention, may be any suitable acetic acid salt such as calcium di(acetate) (CAS# 62-54-4), sodium hydrogen di(acetate) (CAS# 126-96-5), potassium acetate (CAS# 127-08-2), sodium acetate (CAS# 127-09-3), magnesium di(acetate) (CAS# 142-72-3), zinc di(acetate) (CAS# 557-34-6) or ammonium acetate (CAS# 631-61-8).

The citric acid salt, suitable with any aspect of the present invention, may be any suitable citric acid salt such as trisodium citrate (CAS# 68-04-2), disodium hydrogen citrate (CAS# 144-33-2), trizinc dicitrate (CAS# 546-46-3), tricalcium dicitrate (CAS# 813-94-5), tripotassium citrate (CAS# 866-84-2), ammonium iron(III) citrate (CAS# 1185-57-5), iron citrate (CAS# 2338-05-8), diammonium hydrogen 2-hydroxypropane-1,2,3-tricarboxylate (CAS# 3012-65-5), trimagnesium dicitrate (CAS# 3344-18-1), triammonium citrate (CAS# 3458-72-8), dipotassium hydrogen citrate (CAS# 3609-96-9), citric acid, calcium salt (CAS# 7693-13-2), Sodium dihydrogen citrate (CAS# 18996-35-5), 1,2,3-Propanetricarboxylic acid, 2-hydroxy-, sodium salt, hydrate (CAS# 6132-05-4), azanium;3-carboxy-3,5-dihydroxy-5-oxopentanoate (CAS# 947-855).

The formic acid salt, suitable with any aspect of the present invention, may be any suitable formic acid salt such as sodium formate (CAS# 141-53-7), ammonium formate (CAS# 540-69-2), calcium diformate (CAS# 544-17-2) or potassium formate (CAS# 590-29-4).

The glycolic acid salt, suitable with any aspect of the present invention may be any suitable glycolic acid salt such as sodium glycollate (CAS# 2836-32-0) or acetic acid, 2-hydroxy-, ammonium salt (1:1) (CAS# 35249-89-9).

The lactic acids salt, suitable with any aspect of the present invention, may be any suitable lactic acid salt such as sodium lactate (CAS# 72-17-3), L-(+)-lactic acid (CAS# 79-33-4), ammonium lactate (CAS# 515-98-0), calcium dilactate (CAS# 814-80-2), sodium (S)-lactate (CAS# 867-56-1), (R)-lactic acid (CAS# 10326-41-7), zinc dilactate (CAS# 16039-53-5), calcium (S)-2-hydroxypropionate (CAS# 28305-25-1), potassium (S)-lactate (CAS# 85895-78-9), propanoic acid, 2-hydroxy-, ammonium salt (1:1), (2S)-(CAS# 137296-15-2) or propanoic acid, 2-hydroxy-, calcium salt, hydrate (2:1:5) (CAS# 5743-47-5).

The oxalic acid salt, suitable with any aspect of the present invention, may be any suitable oxalic acid salt such as disodium oxalate (CAS# 62-76-0), potassium hydrogen oxalate (CAS# 127-95-7), potassium trihydrogen dioxalate (CAS# 127-96-8), iron(II) oxalate (CAS# 516-03-0), magnesium oxalate (CAS# 547-66-0), dipotassium oxalate (CAS# 583-52-8), diammonium oxalate (CAS# 1113-38-8) or reaction mass of sodium sulphate and trisodium trioxalatoferrate (CAS# 947-037-7).

The propionic acid salt, suitable with any aspect of the present invention, may be any suitable propionic acid salt such as sodium propionate (CAS# 137-40-6), potassium propionate (CAS# 327-62-8), zinc dipropionate (CAS# 557-28-8), calcium dipropionate (CAS# 4075-81-4) or ammonium propionate (CAS# 17496-08-1).

The tartaric acid salts, suitable with any aspect of the present invention, may be any suitable tartaric acid salt such as potassium sodium tartrate (CAS# 304-59-6), sodium hydrogen tartrate (CAS# 526-94-3), potassium hydrogen tartrate (CAS# 868-14-4), disodium tartrate (CAS# 868-18-8), dipotassium tartrate (CAS# 921-53-9), diammonium tartrate (CAS# 3164-29-2), calcium tartrate (CAS# 3164-34-9), sodium L-(+)-tartaric acid dihydrate (CAS# 6106-24-7), potassium sodium tartrate (CAS# 6381-59-5) or sodium tartrate with iron trichloride.

In an alternative embodiment of the present invention, the stabilizer salt is an inorganic sodium salt, a potassium salt, a magnesium salt, a calcium salt, an iron salt, a zinc salt or mixtures thereof.

In a preferred embodiment of the present invention, the stabilizer salt is an inorganic salt with a solubility in water at 20°C of 10 g/100 ml or more, preferably 15 g/100 ml or more and more preferably 20 g/100 ml or more.

In a preferred embodiment of the present invention, the stabilizer salt is selected from a group consisting of: magnesium chloride (MgCl₂, solubility: 54 g/100 ml water at 20°C), magnesium sulfate (MgSO₄, solubility: 35 g/100 ml water at 20°C), magnesium nitrate (MgNO₃, solubility: 71 g/100 ml water at 25°C), calcium chloride (CaCl₂, solubility: 75 g/100 ml water at 20°C), calcium nitrate (Ca(NO₃)₂, solubility: 121 g/100 ml water at 20°C), sodium chloride (NaCl, solubility: 36 g/100 ml water at 25°C), sodium sulfate (Na₂SO₄, solubility: 28 g/100 ml water at 25°C), sodium nitrate (NaNO₃, solubility: 91 g/100 ml water at 25°C), trisodium phosphate (Na₃PO₄, solubility: 15 g/100 ml water at 25°C), monosodium phosphate (NaH₂PO₄, solubility: 95 g/100 ml water at 25°C), potassium sulfate (K₂SO₄, solubility: 12 g/100 ml water at 25°C), potassium chloride (KCI, solubility: 34 g/100 ml water at 20°C), potassium nitrate (KNO₃, solubility: 38 g/100 ml water at 25°C), tripotassium phosphate (K₃PO₄, solubility: 90 g/100 ml water at 20°C), dipotassium phosphate (K₂HPO₄, solubility: 149 g/100 ml water at 20°C), monopotassium phosphate (KH₂PO₄, solubility: 23 g/100 ml water at 25°C), iron sulfate (FeSO₄, solubility: 23 g/100 ml water at 25°C), iron nitrate (Fe(NO₃)₂, solubility: 88 g/100 ml water at 25°C) and zinc sulfate (ZnSO₄, solubility: 58 g/100 ml water at 20°C).

In a more preferred embodiment of the present invention, the stabilizer salt is selected from a group consisting of: magnesium sulfate, calcium chloride, sodium sulfate, monosodium phosphate, monopotassium phosphate, potassium sulfate, potassium nitrate, iron sulfate and zinc sulfate.

In an even more preferred embodiement of the present invention, the stabilizer salt is magnesium sulfate or iron sulfate.

In the most preferred embodiment of the present invention, the stabilizer salt is magnesium sulfate.

The aqueous suspension concentrate of the present invention comprises, the stabilizer salt, if present at all, in an amount of 0 wt.% to 25 wt.%, preferably 1 wt.% to 20 wt.%, more preferably 4 wt.% to 18 wt.% and most preferably 6 wt.% to 15 wt.%, based on the total weight of the aqueous suspension concentrate of the present invention.

### Aqueous phase comprising water

The aqueous suspension concentrate of the present invention comprises an aqueous phase comprising water.

In a preferred embodiment of the present invention, the aqueous phase comprising water is water.

The amount of aqueous phase comprising water in the aqueous suspension concentrate is typically at least 25 wt.%, in preferably at least 30 wt.%, more preferably at least 35 wt.% and most preferably at least 40 wt.%, based on the total weight of the aqueous suspension concentrate of the present invention. The aqueous suspension concentrate comprises up to 85 wt.% of water, preferably up to 70 wt.%, more preferably up to 60 wt.% and most preferably up to 50 wt% of water, each time based on the total weight of the aqueous suspension concentrate of the present invention.

### Other components

The aqueous suspension concentrate of the present invention may comprise one or more other components such as additives. These additives include, but are not limited to, buffers, anti-freeze agents, antifoam agents, dyes, pigments, agrochemical active compounds, biocides such as insecticides, fugicides, herbicides, rodenticides or molluscicides, soil conditioners, liming and acidifying agents, biostimulants such as plant growth regulators, nitrification inhibitors or urease inhibitors, fertilizer, and preservatives.

The aqueous suspension concentrate may further comprise an inorganic or organic buffer to stabilize the pH of the sprayable dilution which is obtained by dilution of the aqueous suspension concentrate with water. The pH of a sprayable dilution of the buffered aqueous suspension concentrate is typically in the range of 2 to 10, preferably in the range of 2.5 to 9, more preferably in the range of 3 to 8, as determined by glass electrode. The buffer is typically a carbonate or a citrate-based buffer, or a mixture thereof, which is in particular selected from alkalimetal carbonates and alkalimetal citrates. For example, the buffer may be potassium carbonate (K₂CO₃) or potassium citrate (tri-potassium citrate), or a mixture thereof. The aqueous suspension concentrate may comprise the buffer in an amount from 0.1 wt.% to 10 wt.%, preferably from 0.2 wt.% to 5 wt.%, based on the total weight of aqueous suspension concentrate of the present invention.

Anti-freeze agents suitable for the aqueous suspension concentrate according to the present invention, are, for example, water-soluble solvents, including alcohols, such as ethanol, ethylene glycol, propylene glycol and glycerol. The amount of such anti-freeze agent may depend on the type of antifreeze and, if present, is typically from 0.1 wt.% to 10 wt.%, based on the total weight of the aqueous suspension concentrate of the present invention.

Antifoam agents, suitable for the aqueous suspension concentrate according to the present invention, are, for example, silicone emulsions (such as, for example, Silicone SRE-PFL from Wacker or Rhodorsil^{®} from Bluestar Silicones), long-chain alcohols, fatty acids, organofluorine compounds and mixtures thereof. The amount of such antifoam agent may depend on the type of antifoam and, if present, is typically from 0.1 wt.% to 10 wt.%, based on the total weight of the aqueous suspension concentrate of the present invention.

Preservatives, suitable for the aqueous suspension concentrate according to the present invention, are, for example, formaldehyde, alkyl esters of p-hydroxybenzoic acid, sodium benzoate, 2-bromo-2-nitropropane-1,3-diol, o-phenylphenol, thiazolinones, such as 1,2-benzothiazol-3(2H)-one, 5-chloro-2-methyl-4-isothiazolinone (CIT), methylisothiazolinon (MIT), pentachlorophenol, 2,4-dichlorobenzyl alcohol, phenoxyethanol, sorbate and mixtures thereof. Commercially available preservatives that are based on isothiazolinones are for example marketed under the trademarks Proxel^{®}, Acticide^{®} grades, such as MV, MBS and B20 (Thor) and Kathon^{®} MK (LANXESS). 2-bromo-2-nitropropane-1,3-diol is commercially available as Acticide^{®} L 30. Preservatives prevent microbial spoiling of the aqueous suspension concentrate of the present invention include

Suitable agrochemical active compounds are selected from the group consisting of pyroxasulfone, the salts of glufosinate, in particular L-glufosinate, the salts of glyphosate, the salts of imidazolinones, such as imazamox, imazapic, imazapyr, imazaquin and imazethapyr, the salts of benzoic acid herbicides, such as the salts of dicamba and tricamba, the salts of phenoxyacetic herbicides, such as 2,4-D, and the salts of quinolone carboxylic acids, such as quinclorac and quinmerac.

Suitable insecticides include insecticides from the class of the carbamates, organophosphates, organochlorine insecticides, phenylpyrazoles, pyrethroids, neonicotinoids, spinosins, avermectins, milbemycins, juvenile hormone analogs, alkyl halides, organotin compounds nereistoxin analogs, benzoylureas, diacylhydrazines, METI acarizides, and insecticides such as chloropicrin, pymetrozin, flonicamid, clofentezin, hexythiazox, etoxazole, diafenthiuron, propargite, tetradifon, chlorofenapyr, DNOC, buprofezine, cyromazine, amitraz, hydramethylnon, acequinocyl, fiuacrypyrim, rotenone, or their derivatives.

Suitable fungicides include fungicides from the classes of dinitroanilines, allylamines, azoic fungicides, anilinopyrimidines, antibiotics, aromatic hydrocarbons, benzenesulfonamides, benzimidazoles, benzisothiazoles, benzophenones, benzothiadiazoles, benzotriazines, benzyl carbamates, carbamates, carboxamides, carboxylic acid diamides, chloronitriles cyanoacetamide oximes, cyanoimidazoles, cyclopropanecarboxamides, dicarboximides, dihydrodioxazines, dinitrophenyl crotonates, dithiocarbamates, dithiolanes, ethylphosphonates, ethylaminothiazolecarboxamides, guanidines, hydroxy-(2-amino)pyrimidines, hydroxyanilides, imidazoles, imidazolinones, isobenzofuranones, methoxyacrylates, methoxycarbamates, morpholines, N-phenylcarbamates, oxazolidinediones, oximinoacetates, oximinoacetamides, peptidylpyrimidine nucleosides, phenylacetamides, phenylamides, phenylpyrroles, phenylureas, phosphonates, phosphorothiolates, phthalamic acids, phthalimides, piperazines, piperidines, propionamides, pyridazinones, pyridines, pyridinylmethylbenzamides, pyrimidinamines, pyrimidines, pyrimidinonehydrazones, pyrroloquinolinones, quinazolinones, quinolines, quinones, sulfamides, sulfamoyltriazoles, strobilurins, thiazolecarboxamides, thiocarbamates, thiophanates, thiophenecarboxamides, toluamides, triphenyltin compounds, triazines or triazoles.

Suitable herbicides include herbicides from the classes of the acetamides, amides, aryloxyphenoxypropionates, benzamides, benzofuran, benzothiadiazinones, bipyridylium, carbamates, chloroacetamides, chlorocarboxylic acids, cyclohexanediones, dinitroanilines, dinitrophenol, diphenyl ether, glycines, imidazolinones, isoxazoles, isoxazolidinones, nitriles, N-phenylphthalimides, oxadiazoles, oxazolidinediones, oxyacetamides, phenoxycarboxylic acids, phenylcarbamates, phenylpyrazoles, phenylpyrazolines, phenylpyridazines, phosphinic acids, phosphoroamidates, phosphorodithioates, phthalamates, pyrazoles, pyridazinones, pyridines, pyridinecarboxylic acids, pyridinecarboxamides, pyrimidinediones, pyrimidinyl(thio)benzoates, quinolinecarboxylic acids, semicarbazones, sulfonylaminocarbonyltriazolinones, sulfonylureas, tetrazolinones, thiadiazoles, thiocarbamates, triazines, triazinones, triazoles, triazolinones, triazolocarboxamides, triazolopyrimidines, triketones, uracils or ureas.

Suitable plant growth regulators include antiauxins, auxins, cytokinins, defoliants, ethylene modulators, ethylene releasers, gibberellins, growth inhibitors, morphactins, growth retardants, growth stimulators, and further unclassified plant growth regulators. Suitable micronutrients are compounds comprising boron, zinc, iron, copper, manganese, chlorine, and molybdenum.

Suitable nitrification inhibitors include linoleic acid, alpha-linolenic acid, methyl p-coumarate, methyl ferulate, methyl 3-(4-hydroxyphenyl) propionate (MHPP), Karanjin, brachialacton, pbenzoquinone sorgoleone, 2-chloro-6-(trichloromethyl)-pyridine (nitrapyrin or N-serve), dicyandiamide (DCD, DIDIN), 3,4-dimethyl pyrazole phosphate (DMPP, ENTEC), 4-amino-1,2,4-triazole hydrochloride (ATC), 1-amido-2-thiourea (ASU), 2-amino-4-chloro-6-methylpyrimidine (AM), 2-mercapto-benzothiazole (MBT), 5-ethoxy-3-trichloromethyl-1,2,4-thiodiazole (terrazole, etridiazole), 2-sulfanilamidothiazole (ST), ammoniumthiosulfate (ATU), 3-methylpyrazol (3-MP), 3,5-dimethylpyrazole (DMP), 1,2,4-triazol thiourea (TU), N-(1Hpyrazolyl-methyl)acetamides such as N-((3(5)-methyl-1H-pyrazole-1-yl)methyl)acetamide, and N-(1H-pyrazolyl-methyl)formamides such as N-((3(5)-methyl-1H-pyrazole-1-yl)methyl formamide, N-(4-chloro-3(5)-methyl-pyrazole-1-ylmethyl)-formamide, N-(3(5),4-dimethylpyrazole-1-ylmethyl)-formamide, neem, products based on ingredients of neem, cyanamide, melamine, catechol, benzoquinone, sodium terta board, zinc sulfate, 2-(3,4-dimethyl-1Hpyrazol-1-yl)succinic acid and/or 2-(4,5-dimethyl-1H-pyrazol-1-yl)succinic acid, and/or a derivative thereof, and/or a salt thereof; glycolic acid addition salt of 3,4-dimethyl pyrazole (3,4-dimethyl pyrazolium glycolate), and/or an isomer thereof, and/or a derivative thereof; citric acid addition salt of 3,4-dimethyl pyrazole (3,4-dimethyl pyrazolium citrate), and/or an isomer thereof, and/or a derivative thereof; lactic acid addition salt of 3,4-dimethyl pyrazole (3,4-dimethyl pyrazolium lactate), and/or an isomer thereof, and/or a derivative thereof; mandelic acid addition salt of 3,4-dimethyl pyrazole (3,4-dimethyl pyrazolium mandelate), and/or an isomer thereof, and/or a derivative thereof; 1,2,4-triazole, and/or a derivative thereof, and/or a salt thereof; 4-Chloro-3-methylpyrazole, and/or an isomer thereof, and/or a derivative thereof, and/or a salt thereof; a reaction adduct of dicyandiamide, urea and formaldehyde, or a triazonyl-formaldehyde-dicyandiamide adduct; 2-cyano-1-((4-oxo-1,3,5-triazinan-1-yl)methyl)guanidine, 1-((2-cyanoguanidino)methyl)urea; 2-cyano-1-((2-cyanoguanidino)methyl)guanidine; 3,4-dimethyl pyrazole phosphate; allylthiourea, and chlorate salts.

Suitable urease inhibitors include N-(n-butyl) thiophosphoric acid triamide (NBPT, Agrotain), N-(n-propyl) thiophosphoric acid triamide (NPPT), 2-nitrophenyl phosphoric triamide (2-NPT), further NXPTs known to the skilled person, phenylphosphorodiamidate (PPD/PPDA), hydroquinone, ammonium thiosulfate, and mixtures of NBPT and NPPT.

The total amount of other components, if present in the aqueous suspension concentrate of the present invention, is typically from 0.1 wt.% to 10 wt.%, in particular from 0.2 wt.% to 5 wt.%, based on the total weight of the of the aqueous suspension concentrate.

### Method of preparing an aqueous suspension concentrate

The aqueous suspension concentrate can be prepared by analogy to well known methods, such as described by Mollet and Grubemann, Formulation technology, Wiley VCH, Weinheim, 2001; or Knowles, New developments in crop protection product formulation, Agrow Reports DS243, T8 F Informa, London, 2005.

In one embodiment of the present invention, the aqueous suspension concentrate of a solid organic compound is prepared according to a preparation process comprising the steps of,
1) mixing the one or more solid organic compounds, surfactants, thickeners and water, to provide a mixture
2) optionally grinding said mixture and
3) optionally filtering said mixture.

The mixing in step 1) is typicallly performed by using mixing devices.

The grinding in step 2) is typicallly performed by using milling devices.

The filtering in step 3) is typicallly performed by using a mesh filter, preferably by using a 100-mesh filter.

In a preferred embodiment of the present invention, the aqueous suspension concentrate of a solid organic compound is prepared according to a preparation process comprising the steps of,
1) providing water,
2) optionally adding stabilizer salt under stirring to the water,
3) adding solid organic compound under stirring to provide a mixture,
4) optionally adding additives under stirring to said mixture,
5) grinding said mixture to a mean particle size of less than 150 µm,
6) adding thickener under stirring to said mixture and
7) filtering said mixture through a 100-mesh filter.

Stirring can be done with all suitable industrial and laboratory stirrers, suitable to distribute the solid material homogeniously in the reaction volume. Grinding can be done with all suitable industrial and laboratory grinders, suitable to grind the initial particles to a mean particle size of <150 µm, preferably <100 µm, and more preferably <50 µm.

Optionally, prior to the mixing in step 1), the solid organic compound can be grinded by using a milling device such as ball mill.

### Aqueous suspension concentrate

The term **"aqueous suspension concentrate"** as used herein defines a suspension of solid organic compound with surfactant, thickener and an aqueous phase comprising water. The aqueous suspension concentrate is intended for dilution with water before end use.

In one embodiment of the present invention, the aqueous suspension concentrate comprises
a) 10 wt.% to 40 wt.%, preferably 15 wt.% to 40 wt.%, more preferably 15 wt.% to 38 wt.% and most preferably 20 wt.% to 35 wt.% of one or more solid organic compounds with a melting point of 20°C or more and a solubility in water at 20°C and 1 bar of 20 g/l or less,
b) 1 wt.% to 15 wt.%, preferably 2 wt.% to 12 wt.%, more preferably 3 wt.% to 10 wt.% and most preferably 4 wt.% to 8 wt.% of one or more surfactants,
c) 0.01 wt.% to 5 wt.%, preferably 0.05 wt.% to 2 wt.%, more preferably 0.1 wt.% to 1 wt.% and most preferably 0.1 wt.% to 0.5 wt.% of one or more thickeners,
d) optionally less than 25 wt.%, preferably 1 wt.% to 20 wt.%, more preferably 4 wt.% to 18 wt.% and most preferably 6 wt.% to 15 wt.% of one or more stabilizer salts, and
e) an aqueous phase comprising water,
wherein the percentages by weight refer to the total weight of the aqueous suspension concentrate.

In a preferred embodiment of the present invention, the aqueous suspension concentrate comprises
a) 10 wt.% to 40 wt.%, preferably 15 wt.% to 40 wt.%, more preferably 15 wt.% to 38 wt.% and most preferably 20 wt.% to 35 wt.% of benzoic acid,
b) 1 wt.% to 15 wt.%, preferably 2 wt.% to 12 wt.%, more preferably 3 wt.% to 10 wt.% and most preferably 4 wt.% to 8 wt.% of one or more surfactants,
c) 0.01 wt.% to 5 wt.%, preferably 0.05 wt.% to 2 wt.%, more preferably 0.075 wt.% to 1 wt.% and most preferably 0.1 wt.% to 0.5 wt.% of one or more thickeners,
d) optionally less than 25 wt.%, preferably 1 wt.% to 20 wt.%, more preferably 4 wt.% to 18 wt.% and most preferably 6 wt.% to 15 wt.% of one or more stabilizer salts, and
e) water,
wherein the percentages by weight refer to the total weight of the aqueous suspension concentrate.

In one embodiment of the present invention, the aqueous suspension concentrate comprises:
a) 30 wt.% to 40 wt.% solid organic compound,
b) 4 wt.% to 8 wt.% surfactant,
c) 0.05 wt.% to 2 wt.% thickener and
d) water,
wherein the percentages by weight refer to the total weight of the aqueous suspension concentrate.

In a preferred embodiment of the present invention, the aqueous suspension concentrate comprises:
a) 30 wt.% to 40 wt.% benzoic acid,
b) 4 wt.% to 8 wt.% rhamnolipid with the EC# 943-175-7 or CAS# 2892303-59-0,
c) 0.05 wt.% to 2.0 wt.% xanthan gum and
d) Water,
wherein the percentages by weight refer to the total weight of the aqueous suspension concentrate.

In another embodiment of the present invention, the aqueous suspension concentrate comprises:
a) 30 wt.% to 40 wt.% solid organic compound,
b) 4 wt.% to 8 wt.% surfactant,
c) 0.05 wt.% to 2.0 wt.% thickener,
d) 6 wt.% to 15 wt.% stabilizer salt and
e) Water,
wherein the percentages by weight refer to the total weight of the aqueous suspension concentrate.

In a preferred embodiment of the present invention, the aqueous suspension concentrate comprises:
a) 30 wt.% to 40 wt.% benzoic acid,
b) 4 wt.% to 8 wt.% rhamnolipid with the EC# 943-175-7 or CAS# 2892303-59-0,
c) 8 wt.% to 15 wt.% MgSO₄,
d) 0.05 wt.% to 2.0 wt.% xanthan gum and
e) Water,
wherein the percentages by weight refer to the total weight of the aqueous suspension concentrate.

In another embodiment of the present invention, the aqueous suspension concentrate comprises:
a) 10 wt.% to 25 wt.% solid organic compound,
b) 4 wt.% to 8 wt.% surfactant,
c) 0.05 wt.% to 2.0 wt.% thickener,
d) 10 wt.% to 20 wt.% stabilizer salt and
e) water
wherein the percentages by weight refer to the total weight of the aqueous suspension concentrate.

In a preferred embodiment of the present invention, the aqueous suspension concentrate comprises:
a) 10 wt.% to 25 wt.% benzoic acid,
b) 4 wt.% to 8 wt.% rhamnolipid with the EC# 943-175-7 or CAS# 2892303-59-0,
c) 0.05 wt.% to 2.0 wt.% xanthan gum,
d) 10 wt.% to 20 wt.% MgSO₄, and
e) water
wherein the percentages by weight refer to the total weight of the aqueous suspension concentrate.

The aqueous suspension concentrate of the present invention has sufficiently low viscosity at 20°C of less than 4,500 mPas to be poured and stability for at least 24 hours at 20°C without irreversible sedimentation (i.e., in case of phase separation or sedimentation, a homogenous suspension can be reestablished by shaking for less than a minute).

Preferred aqueous suspension concentrates of the present invention are stable at 45°C for at least 7 days.

### Method of preparing a sprayable dilution of the aqueous suspension concentrate

The aqueous suspension concentrate of the present invention can be diluted in water to provide a sprayable dilution of said aqueous suspension concentrate comprising the solid organic compound.

In one embodiment of the present invention, the aqueous suspension concentrate can be deployed either as such or after prior dilution with water. Application is affected by customary methods, i.e., for example by spraying, pouring or injecting.

In one embodiment of the present invention, the aqueous suspension concentrate provides a sprayable dilution (which can be, depending on the dilution, still a very fine suspension) obtainable by mixing water with the aqueous suspension concentrate.

In one embodiment of the present invention, the mixing ratio of the aqueous suspension concentrate of the present invention to water may be in the range from 1:1 to 1:1,000, prefarbly 1:5 to 1:500, more preferably 1:15 to 1:200 and most preferably 1:25 to 1:150.

In one preferred embodiment of the present invention, the sprayable dilution is achieved by pouring the aqueous suspension concentrate of the present invention into the water under stirring.

In one embodiment of the present invention, for rapid mixing of the aqueous suspension concentrate with water, it is customary to use agitation.

In one embodiment of the present invention, dilution with water is typically conducted at temperatures in the range from 0°C to 50°C, especially at 10°C to 30°C or at ambient temperature.

In one embodiment of the present invention, water used for dilution is generally tap water. The water may, however, already contain water-soluble or finely suspended compounds which are used in crop protection, for instance nutrients, fertilizers or pesticides.

In one embodiment of the present invention, it is possible to add various kinds of oils, wetting agents, adjuvants, fertilizers or micronutrients and further pesticides (e.g. herbicides, insecticides, fungicides, growth regulators, safeners) to the aqueous suspension concentrate of the present invention in the form of a premix or, if appropriate, not until shortly before use (tank-mix).

The user will apply the sprayable dilution of the present invention typically from a pre-dosing system, a backpack sprayer, a spraying tank, a boom sprayer, a self-propelled sprayer, a aerial spraying aircraft, agricultural drones, electrostatis sprayers, smart spot sprayers or an irrigation system. Typically, 20 to 2,000 litres, preferably 50 to 400 litres, of the sprayable dilution are deployed per hectare of useful agricultural area.

In one embodiment of the present invention, the generally sprayable dilutions of the present invention are applied mainly by spraying, especially spraying on the leaves of plants or on the blossoms of flower, including boom spraying, drone spraying, aerial spraying, electrostatic spraying, spot spraying and targeted spraying.

In one embodiment of the present invention, the sprayable dilutions of the present invention are applied by fogging, in particular fogging in green houses, drenching, smoking, fertigation or chemigation.

In one embodiment of the present invention, the sprayable dilutions of the present invention are applied by modern agricultural application devices, such as robots, drones and planes with and without nozzles.

In one embodiment of the present invention, a method of preparing a sprayable dilution, is provided, comprising the steps of:
1) providing an aqueous suspension concentrate as described herein, and
2) diluting said aqueous suspension concentrate with water in a ratio of 1:1 to 1:1,000, preferably 1:5 to 1:500, more preferably 1:15 to 1:200 and most preferably 1:25 to 1:150 to provide a sprayable dilution.

### Sprayable dilution

Moreover, in said sprayable dilution comprising the solid organic compound, the solid organic compound, which is not dissolved, has an mean particle size of less than 150 µm. The mean particle size of the solid particles of the solid organic compound in the sprayable dilution can be determined by known techniques, such as by the use of a laser diffractometer (e.g. SYNC from Microtrac). The sprayable dilution of the aqueous suspension concentrate can be used according to the typical use of the solid organic compound. Depending on the properties of the solid organic compound the resulting aqueous suspension concentrate can be used after dilution in different application fields, such as plant- and crop-protection (pre- & post-harvest crop-protection), as a plant protection product, biocide, fungicide, herbicide, insecticide, bactericide, algaecide, rodenticides, molluscicides, disinfectant, in-can preservative or corrosion inhibitor.

### Use

In one embodiment of the present invention, the aqueous suspension concentrate is used in its concentrated form as a biocide. Aqueous suspension concentrates can be used as biocides directly (Suspension concentrate for direct application (SD)) without dilution as long as the aqueous suspension concentrate is liquid, pourable or pumpable and can be dosed into the matrix to be preserved.

In one embodiment of the present invention, the sprayable dilution of the present invention is used as a plant protection product.

In a preferred embodiment of the present invention, the solid organic compound is a fungicide and the sprayable dilution can be used as a fungicide. In a preferred embodiment of the present invention, the solid organic compound is benzoic acid and the aqueous suspension concentrate and the sprayable dilutions thereof are used as a fungicide.

Aqueous suspension concentrates of the present invention comprising fungicides and sprayable dilutions thereof can be used in particular as a fungicide against the following fungi: Pezizomycotina, Arthoniomycetes, Coniocybomycetes, Dothideomycetes, Eurotiomycetes, Geoglossomycetes, Laboulbeniomycetes, Lecanoromycetes, Leotiomycetes, Lichinomycetes, Omnivoromycetes, Orbiliomycetes, Pezizomycetes, Sordariomycetes, Xylonomycetes, Lahmiales, Itchiclahmadion, Triblidiales, Saccharomycotina, Saccharomycetes, Taphrinomycotina, Archaeorhizomyces, Neolectomycetes, Pneumocystidomycetes, Schizosaccharomycetes, Taphrinomycetes and basidiomycetes, Phytophthora (including phytophthora connamomi, phytophthora cryptogea and phytophthora infestans), Alternaria, Aspergillus, Botrytis, Cylindrocladium, Dactylium, Fusarium, Mucor, Pythium (Downey mildew), Rhizoctonia, Rhizopus, Thielaviopsis, Trichoderma, Verticillium, Cercospora, Chalara, Colletotrichum, Didymella, Erysiphe (Powdery mildew), Helminthosporium, Hypomyces, Mycogone, Peronospora (Downey mildew), Ramularia, Straptomyces and Taphrina.

Aqueous suspension concentrates of the present invention comprising virucides and sprayable dilutions thereof can be used in particular as a virucide against the following viruses: Tobacco mosaic virus (TMV), Tomato mosai virus (ToMV), Arabis mosaic virus (ArMV), Pelargonium flower brake virus (PFBV), Pelargonium leaf curl virus (PLCV), Pelargonium line pattern virus (PLPV), Tomato black ring virus (TBRV), Tomato spotted wilt virus (TSWV), bell pepper mottle virus (BePMV), Carnation mottle virus (CarMoV), Cucumber green mottle mosaic virus (CGMMV), Cucumber mosaic virus (CMV), Cymbidium mosaic virus (CyMV), Melon necrotic spot virus (MNSV), Odontoglossum ringspot virus (ORSV), Pepino mosaic virus (PepMV), Pepper mild mottle virus (PMMoV), Potato virus X (PVX), Potato virus Y (PMY), Ribgrass mosaic virus (RMV) and Zucchini yellow mosaic virus (ZyMV).

In another embodiment of the present invention, the solid organic compound is a herbicide and the aqueous suspension concentrate is used as a herbicide.

In another embodiment of the present invention, the solid organic compound is a bactericide and the aqueous suspension concentrate can be used as a bactericide. Aqueous suspension concentrates of the present invention comprising bactericides and sprayable dilutions thereof can be used in particular as a bactericide against the following bacteria: Acidovorax, Agrobacterium, Ralstonia, Clavibacter, Erwinia, Psudomonas and Xanthomonas.

In another embodiment of the present invention the solid organic compound is an insecticide and the sprayable dilution can be used as an insecticide.

In another embodiment of the present invention, the solid organic compound and/or the stabilizer salt is a fertilizer and the sprayable dilution can be used as a fertilizer. In one preferred embodiment of the present invention, the aqueous suspension concentrate is used as a fertilizer.

In a preferred embodiment of the present invention, an aqueous suspension concentrate comprising 10 wt.% to 25 wt.% solid organic compound, preferrably benzoic acid, 10 wt.% to 20 wt.% magnesium sulfate, 0.05 wt.% to 2 wt.% thickener and water is used to provide sprayable dilutions for the use as fertilizer.

In another embodiment of the present invention, the solid organic compound is a biostimulant and the sprayable dilution can be used as a biostimulant. In one preferred embodiment of the present invention, the aqueous suspension concentrate is used as a biostimulant.

In another embodiment of the present invention, the solid organic compound is a corrosion inhibitor and the sprayable dilution can be used as a corrosion inhibitor.

In another embodiment of the present invention the solid organic compound is effective against a number of different microorganisms (including bacteria, viruses and fungi) and the sprayable dilution can be used as a disinfectant.

### EXPERIMENTAL PART:

The following examples illustrate the practice of the present invention in some of its embodiments but should not be construed as limiting the scope of the present invention. Other embodiments of the present invention will be apparent to one skilled in the art from consideration of the specification and examples.

It is intended that the specifications, including the examples, is considered exemplary only without limiting the scope and spirit of the present invention

### Materials used:

### Solid organic compounds

- Benzoic acid: CAS# 65-85-0, Purox^{®} B flakes, commercially available at LANXESS
- Salicylic acid: CAS# 69-72-7, commercially available at LANXESS
- p-Thymol: CAS# 3228-02-2, commercially available at LANXESS

### Surfactants

- Rheance^{®} ONE: biosurfactant, rhamnolipid, commercially available at Evonik
- REWOFERM^{®} RL 100: biosurfactant, rhamnolipid, EC# 943-175-7, commercially available at Evonik
- REWOFERM^{®} RL 210: biosurfactant, rhamnolipid, CAS# 2892303-59-0, (EC# 896-041-4), commercially available at Evonik
- REWOFERM^{®} SL ONE: biosurfactant, sophorolipid, CAS# 2102535-74-8, commercially available at Evonik
- Sophance^{®} LA-A: biosurfactant, sophorolipids, CAS# 2102535-74-8, commercially available at Evonik
- Ammonyx^{®} LO: ampholyte surfactant, lauramine oxide, CAS# 1643-20-5, commercially available at Stepan
- BioSoft^{®} N25-7: nonionic surfactant, linear C12-15 alcohol ethoxylate, CAS# 68131-39-5, commercially available at Stepan
- Amphosol^{®} CG: amphoteric surfactant, cocamidopropyl betaine, CAS# 61789-40-0, commercially available at Stepan
- Solbrol^{®} CLL: sodium caproyl/lauroyl lactylate, CAS# 13557-74-9/13557-75-0, fomerly commercially available at LANXESS
- Amphi^{®} CH: biosurfactant, sophorolipids, CAS# 1573124-58-9, commercially available at Locus Ingredients
- Amphi^{®} CL: biosurfactant, sophorolipids, commercially available at Locus Ingredients
- Amphi^{®} M: biosurfactant, sophorolipids, CAS# 1573124-58-9, commercially available at Locus Ingredients
- Lutensol^{®} TO 129: nonionic surfactant, linear alcohol ethoxylate, CAS#69011-36-5, commercially available at BASF
- Arlacel 165: emulsifyer mixture comprising glyceryl monostearate, commercially available at Croda
- Lutensol^{®} TO 89: nonionic surfactant, C13-Oxo alcohol + 8 EO, commercially available at BASF
- ELTESOL^{®} SX 93: sodium xylenesulfonate (SXS), CAS# 1300-72-7, commercially available at Innospec
- BioSoft^{®} D-40: linear alkyl benzene sulfonate liquid, sodium dodecylbenzene sulfonate (SDS), CAS# 25155-30-0, commercially available at Stepan
- Amphosol HCG: cocamidopropyl betaine, CAS# 61789-40-0, commercially available at Stepan
- StepGrow^{®} AB 1008: single surfactant blend for use in suspension concentrate (SC) formulations, commercially available at Stepan
- Glucate DO: methyl glucose dioleate, CAS# 82933-91-3, commercially available at Lubrizol
- Glucopon 600 UP: glucopyranose, oligomeric, C10-16-alkyl glycosides, commercially available at BASF
- Stepan Mild GCC: glyceryl caprylate/caprate, CAS# 91744-32-0, commercially available at Stepan.
- Hallstar PEG 400DL: polyethylene glycol dilaurate, CAS# 9005-02-1, commercially available at Hallstar
- Lipocol Veg Pastilles: ethylene glycol distearate, CAS# 627-83-8, commercially available at Vantage

### Thickener

- Xanthan Gum: CAS# 11138-66-2, commercially available at Jungbunzlauer

### Stabilizer salt

- Calcium chloride: CaCl₂, CAS# 10043-52-4
- Iron sulfate: FeSO₄, CAS# 7720-78-7
- Magnesium sulfate: MgSO₄, CAS# 7487-88-9
- Potassium hydrogen phosphate KH₂PO₄,: CAS# 7778-77-0
- Potassium nitrate: KNO₃, CAS# 7757-79-1
- Potassium sulfate: K₂SO₄, CAS# 7778-80-5
- Sodium benzoate: C₆H₅OONa, CAS# 532-32-1, commercially available at LANXESS
- Sodium hydrogen phosphate: NaH₂PO₄, CAS# 7558-80-7
- Sodium sulfate: Na₂SO₄, CAS# 7757-82-6
- Zinc sulfate: ZnSO₄, CAS# 7733-02-0

### Other compounds

- Water: deionized water (DI water)

### Methods:

Viscosity/Pourability assesment: If not stated otherwise, viscositiy of the aqueous suspension concentrate was measured at 20°C at a shear rate of 100 s⁻¹, using a Brookfield viscometer, spindle #29, 12 RPM, for 30 seconds, unless otherwise noted. Aqueous supension concentrates are defined as "pourable" when the viscosity at 20°C is <5,000 mPas.

Stability assessment: Aqueous supension concentrates are defined as "stable", when the aqueous suspension concentrate
(i) reamains a homogeneous suspension for at least 24 hours at 20°C (i.e., no or almost no separation according to visual inspection) and/or, in case of separation,
(ii) is readily redispersible by inverting the sample three times within 30 seconds without remaining sediment (i.e. no aggregation of dispers particles or caking) according to visual inspection.

Stability tests are performed in standard lab glass containers (e.g., scintillation vials or 250 mL flasks) filled with 50% of the container volume at 20°C.

Heat stability tests are performed at 45°C.

Cold stability tests are performed at 3.8°C.

Particle size measurement: If not stated otherwise, particle sizes were determined by laser diffraction (static light scattering) of an aqueous dilution of the aqueous suspension concentrate according to ISO 13320 with a SYNC from Microtrac.

pH measurement: If not stated otherwise, pH values were determined at 22°C and 1 bar in the undiluted aqueous suspension concentrate by means of a glass electrode.

Grinding: As solid organic compounds such as Purox^{®} B are often delivered in form of flakes, preliminary size reduction with common methods such as dry ball mills is conducted to reduce the particle size to <1 mm.

### Preparation of aqueous suspension concentrates

General preparation method: Solid organic compound, water, and surfactant are placed in a 1 L ball mill jar with 1.35 kg cylindrical ceramic beads. The closed jar is placed on a jar roller and ran at 50 RPM for 16 hours. The mixture is then passed through a 100-mesh wire filter (100 mesh = 149 µm). Thickener is slowly added with a paddle mixer and mixed for 30 minutes until the thickener is completely hydrated and dissolved.

The following examples 1 to 23 (1 kg samples) were prepared according to the general prepartion method.

### EXAMPLE 1: (Inventive Example)

An aqueous suspension concentrate was prepared comprising 30 wt.% Purox^{®} B (benzoic acid), 5 wt.% REWOFERM^{®} RL 100, 0.1 wt.% xanthan gum and 64.9 wt.% water. The mean particle size for this aqueous suspension concentrate is 35 µm +/- 15 µm. The viscosity of the aqueous suspension concentrate is 333 mPas.

### EXAMPLE 2: (Inventive Example)

An aqueous suspension concentrate was prepared comprising 35 wt.% Purox^{®} B, 6 wt.% REWOFERM^{®} RL 100, 0.1 wt.% xanthan gum and the remainder water. The aqueous suspension concentrate is pourable. The viscosity of the aqueous suspension concentrate is 1,000 mPas.

### EXAMPLE 3: (Inventive Example)

An aqueous suspension concentrate was prepared comprising 40 wt.% Purox^{®} B, 6 wt.% REWOFERM^{®} RL 100, 0.1 wt.% xanthan gum and the remainder water. The aqueous suspension concentrate is pourable. The viscosity of the aqueous suspension concentrate is 4,200 mPas.

### EXAMPLE 4: (Non-inventive Example)

Analoge to Example 1, an aqueous suspension concentrate was prepared comprising 45 wt.% Purox^{®} B, 6 wt.% REWOFERM^{®} RL 100, 0.1 wt.% xanthan gum and the remainder water. The yogurt-like aqueous suspension concentrate is not pourable. The viscosity of the aqueous suspension concentrate of >4,500 mPas is too high and, thus, can not be used for the preparation of a sprayable dilution, e.g., for agricultural spray application.

### EXAMPLE 5: (Non-inventive Example)

An aqueous suspension concentrate was prepared comprising 50 wt.% benzoic acid, 6 wt.% REWOFERM^{®} RL 100, 0.1 wt.% xanthan gum and the remainder water. The solidified aqueous suspension concentrate is not pourable. The viscosity of the aqueous suspension concentrate is too high, and, thus, can not be used for the preparation of a sprayable dilution, e.g., for agricultural spray application.

### EXAMPLE 6: (Inventive Example)

An aqueous suspension concentrate was prepared comprising 35 wt.% benzoic acid, 2 wt% BioSoft^{®} D-40 (SDS), 2 wt.% REWOFERM^{®} RL 100, 0.1 wt.% xanthan gum and the remainder water. The aqueous suspension concentrate is pourable. The viscosity of the aqueous suspension concentrate is 583 mPas.

### EXAMPLE 7: (Inventive Example)

An aqueous suspension concentrate was prepared comprising 25 wt.% p-thymol, 6 wt.% REWOFERM^{®} RL 100, 0.1 wt.% xanthan gum and the remainder water. The aqueous suspension concentrate is pourable. The viscosity of the aqueous suspension concentrate is 1,250 mPas.

### EXAMPLE 8: (Inventive Example)

An aqueous suspension concentrate was prepared comprising 25 wt.% salicylic acid, 6 wt.% REWOFERM^{®} RL 100, 0.1 wt.% xanthan gum and the remainder water. The aqueous suspension concentrate is pourable. The viscosity of the aqueous suspension concentrate is 479 mPas.

The following Table 1 displays the composition of the examples (Ex) 1 to 8 as described above, including the stability, viscosity and pourability assements.

**Table 1. Compositions of aqueous suspension concentrates**

| **Example** | **Ex.1** | **Ex.2** | **Ex.3** | **Ex.4** | **Ex.5** | **Ex.6** | **Ex.7** | **Ex.8** |
|---|---|---|---|---|---|---|---|---|
| **Component** | [wt.%] | [wt.] | [wt.%] | [wt.%] | [wt.%] | [wt.%] | [wt.%] | [wt.%] |
| Benzoic acid | 30 | 35 | 40 | 45 | 50 | 30 | | |
| P-Thymol | | | | | | | 25 | |
| Salicylic acid | | | | | | | | 25 |
| REWOFERM^{®} RL 100 | 5 | 6 | 6 | 6 | 6 | 2 | 5 | 5 |
| BioSoft^{®} D-40 | | | | | | 2 | | |
| Xanthan gum | 0.1 | 0.1 | 0.1 | 0.1 | 0.1 | 0.1 | 0.1 | 0.1 |
| Water | to 100 | to 100 | to 100 | to 100 | to 100 | to 100 | to 100 | to 100 |
| **Stability at 20°C** | Yes | Yes | Yes | Yes | Yes | Yes | Yes | Yes |
| **Viscosity [mPas]** | 333 | 1,000 | 4,200 | >4,500 | solidified | 583 | 1,250* | 479* |
| **Pourabillity** | Yes | Yes | Yes | No | No | Yes | Yes | Yes |

| | | | | | | | | |
|---|---|---|---|---|---|---|---|---|
| * measured on Brookfield viscometer using spindle #18, 12 RPM, 30 seconds. | | | | | | | | |

### EXAMPLE 9: (Inventive Example)

An aqueous suspension concentrate was prepared comprising 30 wt.% benzoic acid, 5 wt.% BioSoft^{®} D-40 (SDS), 0.1 wt.% xanthan gum and 64.9 wt.% water. The white, aqueous suspension concentrate is stable, pourable and has a viscosity of 750 mPas.

### EXAMPLE 10: (Inventive Example)

Analoge to Example 1, an aqueous suspension concentrate was prepared comprising 30 wt.% benzoic acid, 5% Glucopon 600 UP, 0.1 wt.% xanthan gum and 64.9 wt.% water. The white, aqueous suspension concentrate is stable, pourable and has a viscosity of 583 mPas.

### EXAMPLE 11: (Inventive Example)

Analoge to Example 1, an aqueous suspension concentrate was prepared comprising 30 wt.% benzoic acid, 5 wt.% Amphosol HCG, 0.1 wt.% xanthan gum and 64.9 wt.% water. The white, aqueous suspension concentrate is stable, pourable and has a viscosity of 333 mPas.

### EXAMPLE 12: (Inventive Example)

Analoge to Example 1, an aqueous suspension concentrate was prepared comprising 30 wt.% benzoic acid, 5 wt.% Stepgrow AB 1008, 0.1 wt.% xanthan gum and 64.9 wt.% water. The white, aqueous suspension concentrate is stable, pourable and has a viscosity of 417 mPas.

### EXAMPLE 13: (Inventive Example)

Analoge to Example 1, an aqueous suspension concentrate was prepared comprising 30 wt.% benzoic acid, 5 wt.% Procol LA-7, 0.1 wt.% xanthan gum and 64.9 wt.% water. The white, aqueous suspension concentrate is stable, pourable and has a viscosity of 1,833 mPas.

### EXAMPLE 14: (Inventive Example)

Analoge to Example 1, an aqueous suspension concentrate was prepared comprising 30 wt.% benzoic acid, 5 wt.% BioSoft^{®} N25-7, 0.1 wt.% xanthan gum and 64.9 wt.% water. The white, aqueous suspension concentrate is stable, pourable and has a viscosity of 3,167 mPas.

### EXAMPLE 15: (Inventive Example)

Analoge to Example 1, an aqueous suspension concentrate was prepared comprising 30 wt.% benzoic acid, 5 wt.% Tergitol 15-S-3, 0.1 wt.% xanthan gum and 64.9 wt.% water. The white, aqueous suspension concentrate is stable, pourable and has a viscosity of 583 mPas.

### EXAMPLE 16: (Inventive Example)

Analoge to Example 1, an aqueous suspension concentrate was prepared comprising 30 wt.% benzoic acid, 5 wt.% Stepan-MILD GCC, 0.1 wt.% xanthan gum and 64.9 wt.% water. The white, aqueous suspension concentrate is stable, pourable and has a viscosity of 833 mPas.

### EXAMPLE 17: (Inventive Example)

Analoge to Example 1, an aqueous suspension concentrate was prepared comprising 30 wt.% benzoic acid, 5 wt.% LIPO EGDS VEG Pastilles, 0.1 wt.% xanthan gum and 64.9 wt.% water. The white, aqueous suspension concentrate is stable, pourable and has a viscosity of 917 mPas.

**Table 2. Compositions of aqueous suspension concentrates (inventive examples)**

| **Example** | **Ex.9** | **Ex.10** | **Ex.11** | **Ex.12** | **Ex.13** | **Ex.14** | **Ex.15** | **Ex.16** | **Ex.17** |
|---|---|---|---|---|---|---|---|---|---|
| **Component** | [wt.%] | [wt.] | [wt.%] | [wt.%] | [wt.%] | [wt.%] | [wt.%] | [wt.%] | [wt.%] |
| Benzoic acid | 30 | 30 | 30 | 30 | 30 | 30 | 30 | 30 | 30 |
| BioSoft^{®} D-40 | 5 | | | | | | | | |
| Glucopon 600 UP | | 5 | | | | | | | |
| Amphosol HCG | | | 5 | | | | | | |
| Stepgrow AB 1008 | | | | 5 | | | | | |
| Procol LA-7 | | | | | 5 | | | | |
| BioSoft N25-7 | | | | | | 5 | | | |
| Tergitol 15-S-3 | | | | | | | 5 | | |
| Stepan Mild GCC | | | | | | | | 5 | |
| LIPO EGDS VEG | | | | | | | | | 5 |
| Xanthan gum | 0.1 | 0.1 | 0.1 | 0.1 | 0.1 | 0.1 | 0.1 | 0.1 | 0.1 |
| Water | to 100 | to 100 | to 100 | to 100 | to 100 | to 100 | to 100 | to 100 | to 100 |
| **Stability at 20°C** | Yes | Yes | Yes | Yes | Yes | Yes | Yes | Yes | Yes |
| **Viscosity [mPas]** | 750 | 583 | 333 | 417 | 1,833 | 3,167 | 583 | 833 | 917 |
| **Pourabillity** | Yes | Yes | Yes | Yes | Yes | Yes | Yes | Yes | Yes |

### EXAMPLE 18: (Inventive Example)

An aqueous suspension concentrate was prepared comprising 30 wt.% benzoic acid, 2 wt.% of a first surfactant (Surfactant 1), 2 wt.% of a second surfactant (Surfactant 2) 0.1 wt.% xanthan gum and the remainder water.

The examples 18.1 to 18.11, comprising the two different surfactants as shown in Table 3, provide aqueous suspension concentrates which are pourable and stable (with a suspension stability of >120 hours).

**Table 3. Surfactant mixtures (2 wt.% Surfactant 1 + 2 wt.% Surfactant 2)**

| **Ex.** | **Surfactant 1** | **Surfactant 2** |
|---|---|---|
| 18.1 | BioSoft^{®} D-40 (SDS) | Rewoferm RL 100 |
| 18.2 | BioSoft^{®} D-40 (SDS) | Glucate DO |
| 18.3 | BioSoft^{®} D-40 (SDS) | ARLACEL^{™} 165-PW-(AP) |
| 18.4 | BioSoft^{®} D-40 (SDS) | Hallstar PEG 400 DL |
| 18.5 | BioSoft^{®} D-40 (SDS) | LANPHOS PET22 |
| 18.6 | ELTESOL^{®} SX 93 (SXS) | Glucate DO |
| 18.7 | ELTESOL^{®} SX 93 (SXS) | ARLACEL^{™} 165-PW-(AP) |
| 18.8 | Stepgrow AB 1008 | Glucate DO |
| 18.9 | Glucate DO | ARLACEL^{™} 165-PW-(AP) |
| 18.10 | Glucate DO | LANPHOS PE35 |
| 18.11 | Hallstar PEG 400 DL | LANPHOS PE35 |

The examples 18.12 to 18.23, comprising the surfactant mixtures as shown in Table 4, provide aqueous suspension concentrates which are pourable and stable (with a redispersible after 7 days).

**Table 4. Surfactant mixtures (2 wt.% Surfactant 1 + 2 wt.% Surfactant 2)**

| **Ex.** | **Surfactant 1** | **Surfactant 2** |
|---|---|---|
| 18.12 | BioSoft^{®} D-40 (SDS) | Rewoferm RL 100 |
| 18.13 | BioSoft^{®} D-40 (SDS) | Glucate DO |
| 18.14 | BioSoft^{®} D-40 (SDS) | ARLACEL^{™} 165-PW-(AP) |
| 18.15 | BioSoft^{®} D-40 (SDS) | Hallstar PEG 400 DL |
| 18.16 | BioSoft^{®} D-40 (SDS) | LANPHOS PET22 |
| 18.17 | ELTESOL^{®} SX 93 (SXS) | Rewoferm RL 100 |
| 18.18 | ELTESOL^{®} SX 93 (SXS) | Hallstar PEG 400 DL |
| 18.19 | Stepgrow AB 1008 | Glucate DO |
| 18.20 | ARLACEL^{™} 165-PW-(AP) | Hallstar PEG 400 DL |
| 18.21 | ARLACEL^{™} 165-PW-(AP) | LANPHOS PE35 |
| 18.22 | Hallstar PEG 400 DL | LANPHOS PE35 |
| 18.23 | LANPHOS PE35 | LANPHOS PET22 |

The results displayed in Table 3 and Table 4 show that various combinations of equal amounts of two surfactants (total amount of surfactant 4 wt.%) lead to aqueous suspension concentrates which are pourable and stable.

### EXAMPLE 19: (Inventive Example)

An aqueous suspension concentrate was prepared comprising 25 wt.% benzoic acid, 5 wt.% Ammonyx LO and 0.1 wt.% xanthan gum and water. The aqueous suspension concentrate was stable for 144 hours.

### EXAMPLE 20: (Inventive Example)

An aqueous suspension concentrate was prepared comprising 25 wt.% benzoic acid, 5 wt.% Amphi M and 0.1 wt.% xanthan gum and water. The aqueous suspension concentrate was stable for 24 hours.

### EXAMPLE 21: (Inventive Example)

An aqueous suspension concentrate was prepared comprising 25 wt.% benzoic acid, 5 wt.% Rheance^{®} ONE and 0.1 wt.% xanthan gum and water. The aqueous suspension concentrate was stable for 144 hours.

### EXAMPLE 22: (Inventive Example)

An aqueous suspension concentrate was prepared comprising 25 wt.% benzoic acid, 5 wt.% Lutensol^{®} TO 129 and 0.1 wt.% xanthan gum and water. The aqueous suspension concentrate was stable for 24 hours.

### EXAMPLE 23: (Inventive Example)

An aqueous suspension concentrate was prepared comprising 25 wt.% benzoic acid, 5 wt.% Lutensol^{®} TO 89 and 0.1 wt.% xanthan gum and water. The aqueous suspension concentrate was stable for 24 hours.

### STABILIZED AQUEOUS SUSPENSION CONCENTRATES

### Preparation of stabilized aqueous suspension concentrates

General preparation method: A salt solution is provided mixing stabilizer salt with water. Solid organic compound, salt solution and surfactent are placed in a 1 L ball mill jar with 1.35 kg cylindrical ceramic beads. The closed jar is placed on a jar roller and run at 50 RPM fo 16 hours. The mixture is then passed through a 100-mesh wire filter (100 mesh = 149 µm). Thickener is slowly added with a paddle mixer and mixed for 30 minutes until the thickener is completely hydrated and dissolved.

The following examples 24 to 58 (1 kg samples) of stabilized aqueous suspension concentrates were prepared according to the general preparation method for the preparation of stabilized aqueous suspension concentrates.

### EXAMPLES 24-31: (inventive examples; except example 31)

Examples 24 to 31 were prepared according to the compositions as shown in Table 5.

**Table 5. Compositions of MgSO₄-stabilized aqueous suspension concentrates**

| | **Ex.24** | **Ex.25** | **Ex.26** | **Ex.27** | **Ex.28** | **Ex.29** | **Ex.30** | **Ex.31** |
|---|---|---|---|---|---|---|---|---|
| **Component** | **[wt.%]** | **[wt.%]** | **[wt.%]** | **[wt.%]** | **[wt.%]** | **[wt.%]** | **[wt.%]** | **[wt.%]** |
| Benzoic acid | 35 | 35 | 35 | 35 | 25 | 20 | 20 | 20 |
| REWOFERM^{®} RL 210 | 6 | | 6 | 6 | 6 | 6 | 6 | 6 |
| BioSoft^{®} D-40 | | 6 | | | | | | |
| Xanthan gum | 0.1 | 0.1 | 0.1 | 0.1 | 0.1 | 0.1 | 0.1 | 0.1 |
| MgSO₄ | 10 | 10 | 12.5 | 5 | 10 | 15 | 20 | 25 |
| Water | to 100 | to 100 | to 100 | to 100 | to 100 | to 100 | to 100 | to 100 |
| **Stability at 20°C** | Yes | Yes | Yes | Yes | Yes | Yes | Yes | No |
| **Pourability** | Yes | Yes | Yes | Yes | Yes | Yes | Yes | Yes |

The mean particle size of the stablized aqueous suspension concentrates as shown in Table 5 is 35 µm +/- 15 µm. The stablized aqueous suspension concentrates of Examples 24 to 30 as shown in Table 5 are stable at 20°C for 7 days. In the case of a slight sedimentation after 7 days, it is easily redispersable within less than a minute.

A concentration of 25 wt.% MgSO₄, as shown in non-inventive Example 31, is too high and results in a block of sediments at 20°C.

EXAMPLES 32 to 39 were prepared according to the compositions as shown in Table 6, comprising 5 wt.% of stabilizer salt.

**Table 6. Compositions of stabilized aqueous suspension concentrates (Examples 32-39)**

| | **Ex.32** | **Ex.33** | **Ex.34** | **Ex.35** | **Ex.36** | **Ex.37** | **Ex.38** | **Ex.39** |
|---|---|---|---|---|---|---|---|---|
| **Component** | **[wt.%]** | **[wt.%]** | **[wt.%]** | **[wt.%]** | **[wt.%]** | **[wt.%]** | **[wt.%]** | **[wt.%]** |
| Benzoic acid | 35 | 35 | 35 | 35 | 25 | 20 | 20 | 20 |
| REWOFERM^{®} RL 210 | 6 | 6 | 6 | 6 | 6 | 6 | 6 | 6 |
| Xanthan gum | 0.1 | 0.1 | 0.1 | 0.1 | 0.1 | 0.1 | 0.1 | 0.1 |
| Na benzoate | 5 | | | | | | | |
| CaCl₂ | | 5 | | | | | | |
| KNO₃ | | | 5 | | | | | |
| Na₂SO₄ | | | | 5 | | | | |
| K₂SO₄ | | | | | 5 | | | |
| FeSO₄ | | | | | | 5 | | |
| ZnSO₄ | | | | | | | 5 | |
| K₂HPO₄ | | | | | | | | 5 |
| Water | to 100 | to 100 | to 100 | to 100 | to 100 | to 100 | to 100 | to 100 |
| **Stability at 20°C** | Yes | Yes | Yes | Yes | Yes | Yes | Yes | Yes |
| **Pourability** | Yes | Yes | Yes | Yes | Yes | Yes | Yes | Yes |

EXAMPLES 40 to 47 were prepared according to the compositions as shown in Table 7, comprising 10 wt.% of stabilizer salt.

**Table 7. Compositions of stabilized aqueous suspension concentrates (Examples 40-47)**

| | **Ex.40** | **Ex.41** | **Ex.42** | **Ex.43** | **Ex.44** | **Ex.45** | **Ex.46** | **Ex.47** |
|---|---|---|---|---|---|---|---|---|
| **Component** | **[wt.%]** | **[wt.%]** | **[wt.%]** | **[wt.%]** | **[wt.%]** | **[wt.%]** | **[wt.%]** | **[wt.%]** |
| Benzoic acid | 35 | 35 | 35 | 35 | 25 | 20 | 20 | 20 |
| REWOFERM^{®} RL 210 | 6 | 6 | 6 | 6 | 6 | 6 | 6 | 6 |
| Xanthan gum | 0.1 | 0.1 | 0.1 | 0.1 | 0.1 | 0.1 | 0.1 | 0.1 |
| Na benzoate | 10 | | | | | | | |
| CaCl₂ | | 10 | | | | | | |
| KNO₃ | | | 10 | | | | | |
| Na₂SO₄ | | | | 10 | | | | |
| K₂SO₄ | | | | | 10 | | | |
| FeSO₄ | | | | | | 10 | | |
| ZnSO₄ | | | | | | | 10 | |
| K₂HPO₄ | | | | | | | | 10 |
| Water | to 100 | to 100 | to 100 | to 100 | to 100 | to 100 | to 100 | to 100 |
| **Stability at 20°C** | Yes | Yes | Yes | Yes | Yes | Yes | Yes | Yes |
| **Pourability** | Yes | Yes | Yes | Yes | Yes | Yes | Yes | Yes |

### Heat stability of stabilized aqueous suspension concentrates

### EXAMPLE 48: (Inventive Example)

As a comparison, a non-stabilized aqueous suspension concentrate was prepared comprising 35 wt.% benzoic acid, 6 wt.% REWOFERM^{®} RL 210, 0 wt.% MgSO₄, 0.1 wt.% xanthan gum and water (identical to EXAMPLE 2). The aqueous suspension concentrate is not stable at 45°C, resulting in growth of large benzoic acid crystals when it is cooled down afterwards to 20°C.

### EXAMPLE 49: (Inventive Example)

A stabilized aqueous suspension concentrate was prepared comprising 35 wt.% benzoic acid, 6 wt.% REWOFERM^{®} RL 210, 1.25 wt.% MgSO₄, 0.1 wt.% xanthan gum and water. The aqueous suspension concentrate is not stable at 45°C, resulting in growth of large benzoic acid crystals when it is cooled down afterwards to 20°C.

### EXAMPLE 50: (Inventive Example)

A stabilized aqueous suspension concentrate was prepared comprising 35 wt.% benzoic acid, 6 wt.% REWOFERM^{®} RL 210, 2.5 wt.% MgSO₄, 0.1 wt.% xanthan gum and water. The aqueous suspension concentrate is not stable at 45°C, resulting in growth of large benzoic acid crystals when it is cooled down afterwards to 20°C.

### EXAMPLE 51:

A stabilized aqueous suspension concentrate was prepared comprising 35 wt.% benzoic acid, 6 wt.% REWOFERM^{®} RL 210, 5 wt.% MgSO₄, 0.1 wt.% xanthan gum and water. The aqueous suspension concentrate is not stable at 45°C, resulting in growth of small benzoic acid crystals when it is cooled down afterwards to 20°C.

### EXAMPLE 52: (Inventive Example)

A stabilized aqueous suspension concentrate (identical to EXAMPLE 24) was prepared comprising 35 wt.% benzoic acid, 6 wt.% REWOFERM^{®} RL 210, 10 wt.% MgSO₄, 0.1 wt.% xanthan gum and water. The aqueous suspension concentrate is stable for 7 days at 45°C and does not precipitate or crystalize when it is cooled down afterwards to 20°C.

### EXAMPLE 53: (Inventive Example)

A stabilized aqueous suspension concentrate (identical to EXAMPLE 26) was prepared comprising 35 wt.% benzoic acid, 6 wt.% REWOFERM^{®} RL 210, 12.5 wt.% MgSO₄, 0.1 wt.% xanthan gum and water. The aqueous suspension concentrate is stable for 7 days at 45°C and does not precipitate or crystalize when it is cooled down afterwards to 20°C.

### EXAMPLE 54: (Inventive Example)

A stabilized aqueous suspension concentrate was prepared comprising 35 wt.% benzoic acid, 6 wt.% REWOFERM^{®} RL 210, 10 wt.% FeSO₄, 0.1 wt.% xanthan gum and water. The aqueous suspension concentrate is stable for 7 days at 45°C and does not precipitate or crystalizes when it is cooled down afterwards to 20°C.

**Table 8. Compositions of stabilized aqueous suspension concentrates (Examples 48-54)**

| | **Ex.48** | **Ex.49** | **Ex.50** | **Ex.51** | **Ex.52** | **Ex.53** | **Ex.54** |
|---|---|---|---|---|---|---|---|
| **Component** | **[wt.%]** | **[wt.%]** | **[wt.%]** | **[wt.%]** | **[wt.%]** | **[wt.%]** | **[wt.%]** |
| Benzoic acid | 35 | 35 | 35 | 35 | 35 | 35 | 35 |
| REWOFERM^{®} RL 210 | 6 | 6 | 6 | 6 | 6 | 6 | 6 |
| Xanthan gum | 0.01 | 0.01 | 0.01 | 0.01 | 0.01 | 0.01 | 0.01 |
| MgSO₄ | 0 | 1.25 | 2.5 | 5 | 10 | 12.5 | |
| FeSO₄ | | | | | | | 10 |
| Water | to 100 | to 100 | to 100 | to 100 | to 100 | to 100 | to 100 |
| **Heat Stability** | No | No | No | No | Yes | Yes | Yes |
| **Pourability** | Yes | Yes | Yes | Yes | Yes | Yes | Yes |

| | | | | | | | |
|---|---|---|---|---|---|---|---|
| Heat stability = stability assessment after 7 days at 45°C | | | | | | | |

The results of the heat stability assement (7-day aging at 45°C) show, that increasing levels of MgSO₄ increase the heat stability of the stabilized aqueous suspension concentrate. Large crystals of benzoic acid were observed in the 0 wt.%, 1.25 wt.%, and 2.5 wt.% and smaller crystals were observed in the 5 wt.% sample. The 10 wt.% and 12.5 wt.% samples had little to no crystal growth. Redispersability was also assessed by inverting the vials. Again, only the 10% and 12.5% samples were easily redispersable. The results show that 10 wt.% MgSO₄, 12.5 wt.% MgSO₄ and 10 wt.% FeSO₄ improve the stability of the aqueous suspension concentrate of the present invention.

### EXAMPLE 55: (Inventive Example)

An aqueous suspension concentrate (identical to EXAMPLE 29) was prepared comprising 20 wt.% benzoic acid, 6 wt.% REWOFERM^{®} RL 210, 15 wt.% MgSO₄, 0.1 wt.% thickener and water. The aqueous suspension concentrate is stable for 7 days at 45°C.

### EXAMPLE 56: (Inventive Example)

An aqueous suspension concentrate (identical to EXAMPLE 28) was prepared comprising 25 wt.% benzoic acid, 6 wt.% REWOFERM^{®} RL 210, 10 wt.% MgSO₄, 0.1 wt.% thickener and water. The aqueous suspension concentrate is stable for 7 days at 45°C.

### EXAMPLE 57: (Inventive Example)

An aqueous suspension concentrate (identical to EXAMPLE 30) was prepared comprising 20 wt.% benzoic acid, 6 wt.% REWOFERM^{®} RL 210, 20 wt.% MgSO₄, 0.1 wt.% thickener and water. The aqueous suspension concentrate is stable for 7 days at 45°C.

### EXAMPLE 58: (Non-Inventive Example)

An aqueous suspension concentrate (identical to EXAMPLE 31) was prepared comprising 20 wt.% benzoic acid, 6 wt.% surfactant, 25 wt.% MgSO₄, 0.1 wt.% thickener and water. The aqueous suspension concentrate is not stable at 45°C and crystalized block is formed which is not redispersible, even with vigorous shaking.

**Table 9. Compositions of stabilized aqueous suspension concentrates**

| **Experiment** | **Ex.55** | **Ex.56** | **Ex.57** | **Ex.58** |
|---|---|---|---|---|
| [Unit] | [wt.%] | [wt.%] | [wt.%] | [wt.%] |
| Benzoic acid | 20 | 25 | 20 | 20 |
| REWOFERM^{®} RL 210 | 6 | 6 | 6 | 6 |
| Xanthan gum | 0.1 | 0.1 | 0.1 | 0.1 |
| MgSO₄ | 15 | 10 | 20 | 25 |
| Water | to 100 | to 100 | to 100 | to 100 |
| **Heat Stability** | Yes | Yes | Yes | No |
| **Pourability** | Yes | Yes | Yes | Yes |

| | | | | |
|---|---|---|---|---|
| Heat stability = stability assessment after 7 days at 45°C | | | | |

### Preparation of sprayable dilutions

An aqueous suspension concentrate comprising 30 wt.% benzoic acid, 5 wt.% REWOFERM^{®} RL 100 and 0.1 wt.% xanthan gum was diluted 1:25 and 1:200 in water. The resulting sprayable dilutions (pH 3.1 and 3.8) shows no particles by visual inspection.

An aqueous suspension concentrate comprising 35 wt.% benzoic acid, 6 wt.% REWOFERM^{®} RL 100 and 0.1 wt.% xanthan gum was diluted in ratios of 1:10, 1:20, 1:25, 1:30, 1:40, 1:50 and 1:100 in water. The resulting sprayable dilution (pH 3.35 to 3.15) shows no particles by visual inspection.

The stabilized aqueous suspension concentrates of EXAMPLE 55 to 57 were diluted in ratios of 1:100. The resulting sprayable dilutions (pH 4.06 4.33) show no particles by visual inspection.

### Spraying properties

Aqueous suspension concentrates comprising up to 35 wt.% benzoic acid are redispersable and dilutable and will not block the nozzles because the sprayable dilution passes a 100-mesh filter (149 µm). A 100-mesh filter is typically used in application apparatuses such as spraying devices of a tractor or airplane to protect the nozzles. In the tank the sprayable dilution is also constantly stirred so that non-dissolved dispersed particles of the solid organic compound will not sediment.

## Claims

1. An aqueous suspension concentrate comprising
a) 10 wt.% to 40 wt.%, preferably 15 wt.% to 40 wt.%, more preferably 15 wt.% to 38 wt.% and most preferably 20 wt.% to 35 wt.% of one or more solid organic compounds with a melting point of 20°C or more and a solubility in water at 20°C and 1 bar of 20 g/l or less,
b) 1 wt.% to 15 wt.%, preferably 2 wt.% to 12 wt.%, more preferably 3 wt.% to 10 wt.% and most preferably 4 wt.% to 8 wt.% of one or more surfactants,
c) 0.01 wt.% to 5 wt.%, preferably 0.05 wt.% to 2 wt.%, more preferably 0.075 wt.% to 1 wt.% and most preferably 0.1 wt.% to 0.5 wt.% of one or more thickeners,
d) optionally less than 25 wt.%, preferably 1 wt.% to 20 wt.%, more preferably 4 wt.% to 18 wt.% and most preferably 6 wt.% to 20 wt.% of one or more stabilizer salts, and
e) an aqueous phase comprising water,
wherein the percentages by weight refer to the total weight of the aqueous suspension concentrate.

2. The aqueous suspension concentrate according to claim 1, **characterized in that** the solid organic compound is an agrochemical, preferably selected from the group consisting of: 1-dodecanol, 1-hexadecanol, 1-naphthylacetic acid, 2,4-dichlorophenoxyacetic acid, 4-(2,4-dichlorophenoxy)butyric acid, 2-hydroxybenzoic acid, 2-phenylphenol, 4-chloro-3-methylphenol, azoxystrobin, benzoic acid, capric acid, cinnamic acid, dichlorprop-P, diclofop, fludioxonil, gibberellic acid, phenylacetic acid, phenylpropanoic acid, S-abscisic acid, sorbic acid, thiabendazole, thymol and p-thymol, more preferably benzoic acid, salicylic acid, cinnamic acid or p-thymol and most preferably benzoic acid.

3. The aqueous suspension concentrate according to claim 1 or 2, **characterized in that** the surfactant is selected from the group consisting of anionic surfactants, cationic surfactants, non-ionic surfactants, amphoteric surfactants biosurfactants and mixtures thereof, preferably selected from a group consisting of rhamnolipid, sophorolipid, sodium xylenesulfonate (SXS), sodium dodecylbenzene sulfonate (SDS), linear alcohol ethoxylate, lauramine oxide, cocamidopropyl betaine, sodium caproyl/lauroyl lactylate, glyceryl caprylate/caprate, glyceryl monostearate, ethylene glycol distearate, methyl glucose dioleate, polyethylene glycol dilaurate, glycosides and mixtures thereof, more preferably selected from a group consisting of rhamnolipid and sphorolipid and mixtures thereof, even more preferably rhamnolipid with the EC# 943-175-7 or with the CAS# 2892303-59-0 and most preferably rhamnolipid with the CAS# 2892303-59-0.

4. The aqueous suspension concentrate according to any of claims 1 to 3, **characterized in that** the thickener is selcted from a group consisting of polysaccharides, clays, celluloses, polyacrylates, and silicas, in particular starch, xanthan gum, guar gum, locust bean gum, gum karaya, gum tragacanth, gum arabic, methyl cellulose, ethyl cellulose, methylhydroxyethyl cellulose, methylhydroxyethylhydroxypropyl cellulose, hydroxypropyl methyl cellulose, pectin, agar, alginin, carrageenan, pullulan, and alginic acid salts, preferably selected from the group consisting of xanthan gum, gum arabic, gaur gum, carboxymethyl cellulose, chitosan, bentonite, precipitated silica and mixtures thereof, more preferabyl selected from the group consisting of xanthan gum, guar gum, and a cellulose-based thickener and most preferably xanthan gum.

5. The aqueous suspension concentrate according to any of claims 1 to 4, **characterized in that** the stabilizer salt is an inorganic salt with a solubility in water at 20°C of 20 g/100 ml or higher, preferably selected from the group consisting of inorganic sodium salt, potassium salt, magnesium salt, calcium salt, iron salt, zinc salt and mixtures thereof, more preferably magnesium sulfate, calcium chloride, sodium sulfate, monosodium phosphate, potassium sulfate, potassium nitrate, iron sulfate and zinc sulfate, even more preferably magnesium sulfate or iron sulfate and most preferably magnesium sulfate.

6. The aqueous suspension concentrate according to any of claims 1 to 5, further comprising one or more additives, selected from the group consisting of: buffers, anti-freeze agents, antifoam agents, dyes, pigments, agrochemical active compounds, biocides such as insectizides, fugizides, herbizides, rodenticides or molluscicides, soil conditioners, liming and acidifying agents, biostimulants such as plant growth regulators, nitrification inhibitors or urease inhibitors, fertilizer, and preservatives,
wherein the additive in present in an amount of 0.1 wt.% to 10 wt.%, preferably 0.2 wt.% to 5 wt.%, based on the total weight of the aqueous suspension concentrate.

7. The aqueous suspension concentrate according to any of claims 1 to 6, comprising
a) 10 wt.% to 40 wt.% benzoic acid,
b) 1 wt.% to 15 wt.% surfactant,
c) 0.01 wt.% to 2.0 wt.% thickener and
d) water,
wherein the percentages by weight refer to the total weight of the aqueous suspension concentrate.

8. The aqueous suspension concentrate according to any of claims 1 to 7, comprising
a) 30 wt.% to 40 wt.% benzoic acid,
b) 4 wt.% to 8 wt.% rhamnolipid with the EC# 943-175-7 or CAS# 2892303-59-0,
c) 0.05 wt.% to 2 wt.% xanthan gum and
d) water,
wherein the percentages by weight refer to the total weight of the aqueous suspension concentrate.

9. The aqueous suspension concentrate according to any of claims 1 to 7, comprising
a) 30 wt.% to 40 wt.% benzoic acid,
b) 4 wt.% to 8 wt.% rhamnolipid with the EC# 943-175-7 or CAS# 2892303-59-0,
c) 6 wt.% to 15 wt.% MgSO₄,
d) 0.05 wt.% to 2 wt.% xanthan gum and
e) water,
wherein the percentages by weight refer to the total weight of the aqueous suspension concentrate.

10. The aqueous suspension concentrate according to any of claims 1 to 7, comprising
a) 10 wt.% to 25 wt.% benzoic acid,
b) 4 wt.% to 8 wt.% rhamnolipid with the EC# 943-175-7 or CAS# 2892303-59-0,
c) 10 wt.% to 20 wt.% MgSO₄,
d) 0.05 wt.% to 2 wt.% xanthan gum and
e) water,
wherein the percentages by weight refer to the total weight of the aqueous suspension concentrate.

11. A method of preparing an aqueous suspension concentrate according to any of claims 1 to 10,
**characterized in that** the process comprises the steps of:
1) mixing the one or more solid organic compounds, surfactants, thickeners, optionally stabilizer salts, and water to provide a mixture,
2) optionally grinding said mixture and
3) optionally filtering said mixture.

12. A method of preparing a sprayable dilution, **characterized in that** it comprises the steps of:
1) providing an aqueous suspension concentrate according to any of the claims 1 to 10,
2) diluting said aqueous suspension concentrate with water in a ratio of 1:1 to 1:1,000, preferably 1:5 to 1:500, more preferably 1:15 to 1:200 and most preferably 1:25 to 1:150, to provide a sprayable dilution.

13. A sprayable dilution prepared according to the method of claim 12.

14. Use of an aqueous suspension concentrate according to any of claims 1 to 10, comprising benzoic acid, as a disinfectant, fertilizer, biostimulant or plant protection product, preferably as a fungicide.

15. Use of the sprayable dilution according to claim 13, comprising benzoic acid, as a disinfectant, fertilizer, biostimulant or plant protection product, preferably as a fungicide.
